# EUROPÄISCHE PATENTSCHRIFT

(11) **EP 3 300 504 B1**
(45) Veröffentlichungstag und Bekanntmachung des Hinweises auf die Patenterteilung: **19.06.2019**
(21) Anmeldenummer: 16781995.2
(22) Anmeldetag: 02.09.2016
(51) Int. Cl.: C08G 59/68, C08F 4/52, C08G 65/10

(54) **NEUE INITIATOREN UND DEREN VERWENDUNG FÜR DIE KATIONISCHE PHOTOPOLYMERISATION**
NOVEL INITIATORS AND THEIR USE FOR CATIONIC PHOTOPOLYMERIZATION
NOUVEAUX INITIATEURS ET LEUR UTILISATION POUR UNE PHOTOPOLYMÉRISATION CATIONIQUE

(30) Priorität: 02.09.2015 AT 5772015
(43) Veröffentlichungstag der Anmeldung: 04.04.2018
(73) Patentinhaber: Technische Universität Wien, 1040 Wien (AT); Albert-Ludwigs-Universität Freiburg, 79085 Freiburg im Breisgau (DE)
(72) Erfinder: LISKA, Robert, 2123 Schleinbach (AT); BOMZE, Daniel, 1190 Wien (AT); KROSSING, Ingo, 79104 Freiburg im Breisgau (DE); KNAACK, Patrick, 1160 Wien (AT)
(74) Vertreter: Ellmeyer, Wolfgang
(86) Internationale Anmeldenummer: PCT/AT2016/060048
(87) Internationale Veröffentlichungsnummer: WO 2017/035552

(56) Entgegenhaltungen:
- EP-A1- 2 223 948
- EP-A2- 1 061 101
- DE-A1- 10 063 066
- INGO KROSSING ET AL: "Relative Stabilities of Weakly Coordinating Anions: A Computational Study", CHEMISTRY - A EUROPEAN JOURNAL., Bd. 10, Nr. 20, 18. Oktober 2004 (2004-10-18), Seiten 5017-5030, XP055290037, WEINHEIM, DE ISSN: 0947-6539, DOI: 10.1002/chem.200400087

## Beschreibung

Die vorliegende Erfindung betrifft die Verwendung neuer Aryliodonium- und -sulfoniumsalze als Initiatoren für die kationische Photopolymerisation.

### STAND DER TECHNIK

Seit einigen Jahren hat sich die Verwendung von Oniumsalzen als Photoinitiatoren für die kationische Photopolymerisation bewährt, wobei Iodonium- und Sulfoniumsalze zu den gängigsten Initiatoren zählen. Ein solcher kationischer Photoinitiator wird auch als Photosäurebildner oder -generator bezeichnet, der bei Bestrahlung mit (üblicherweise ultraviolettem) Licht in einen angeregten Zustand übergeht, in dem sodann eine Bindung homo- oder heterolytisch gespalten wird, woraufhin von anderen Molekülen im Reaktionsgemisch, vorzugsweise von den kationisch zu polymerisierenden Monomeren, ein Wasserstoffatom abstrahiert wird, um mit dem Anion des Iodonium- oder Sulfonium-Kations eine sog. Photosäure zu bilden. Bei Letzterer handelt es sich vorzugsweise um eine sehr starke Säure, wie z.B. eine Supersäure, die ihrerseits ein Monomer protoniert und so die kationische Polymerisation initiiert. Die Iodonium- bzw. Sulfoniumkationen liegen in diesen Salzen daher in der Regel in Kombination mit einem einer sehr starken Säure entsprechenden Anion vor, das zudem geringe Nukleophilie aufweisen soll.

In WO 99/12938 A1 werden Anionen der nachstehenden Formel offenbart

[M₁(XC(CFₐ(R₁)_{b})(CF_{c}(R₂)_{d})R₃)ₘ(R₄)ₙ]^{-p}

worin
M₁ ein Übergangsmetall oder ein Element der Gruppe III, IV oder V darstellt;
p = 1 oder 2 ist;
X jeweils unabhängig für O, S oder NR₅R₆ steht;
R₁ und R₂ jeweils unabhängig für H, ein Halogenid oder C₁₋₄-Alkyl stehen;
R₃ jeweils unabhängig für H, C₁₋₄-Alkyl oder C₄₋₂₀-Aryl steht;
R₄ jeweils unabhängig für C₁₋₁₀-Alkyl, C₁₋₁₀-Alkoxid oder C₄₋₂₀-Aryloxid steht;
R₅ und R₆ jeweils unabhängig für H oder C₁₋₂₀-Alkyl stehen;
a und c jeweils unabhängig für eine ganze Zahl von 0 bis 3 stehen;
a+b = 3 ist;
c+d = 3 ist;
m eine ganze Zahl von 2 bis 8 ist; und
n eine ganze Zahl von 0 bis 4 ist;
mit der Maßgabe, dass zumindest eines von a und c ungleich 0 ist.

Als eine konkrete Verbindung aus der riesigen Anzahl an möglichen Kombinationen wird Lithium-tetrakis(perfluor-t-butyloxy)aluminat, LiAl(PFTB)₄, offenbart und im dortigen Beispiel 17 synthetisiert und charakterisiert. Dieses Salz wurde jedoch nicht auf seine elektrischen oder sonstigen Eigenschaften getestet und stellt daher nur eines von vielen tatsächlich synthetisierten Beispielen für die dortige Erfindung dar.

Allgemein sollen sämtliche in WO 99/12938 A1 offenbarten Anionen der obigen Formel aufgrund ihrer guten elektrischen Leitfähigkeit als Elektrolyte für elektrochemische Vorrichtungen geeignet sein, wobei als Gegenion M ein Metallkation, ein Phosphoniumkation, ein Ammoniumkation oder ein Sulfoniumkation eingesetzt werden kann.

In der Folge wurde von I. Raabe, A. Reisinger und I. Krossing, "Efficient syntheses of Li[Al(ORF)4], Ag[Al(ORF)4] (RF = C(CF3)3, C(H)(CF3)2, C(CH3)(CF3)2)) and [H(OEt2)2]+ [Al(OC(CF3)3)4]-", H. W. Roesky und Dietmar K. Kennepohl (Hrsg), Experiments in Green and Sustainable Chemistry, Wiley VCF, S. 131-144 (2009), ein effizienteres Herstellungsverfahren für Lithium-tetrakis(perfluor-t-butyloxy)aluminat offenbart.

Diaryliodoniumsalze mit Anionen mit geringer Nucleophilie, bspw. B[(C₆F₅)₄]⁻, und die Verwendung solcher Salze als Photoinitiator in kationisch härtenden Massen werden in EP 1 061 101 A2 beschrieben.

Ziel der Erfindung war vor diesem Hintergrund die Entwicklung neuer Initiatoren, die sich durch bessere Eigenschaften als die bekannten Initiatoren auszeichnen.

### OFFENBARUNG DER ERFINDUNG

Dieses Ziel erreicht die vorliegende Erfindung durch Bereitstellung der neuen Verwendung von Aryliodonium- und/oder Arylsulfoniumsalzen des Tetrakis(perfluor-t-butyloxy)aluminat-Anions der nachstehenden Formel (I): 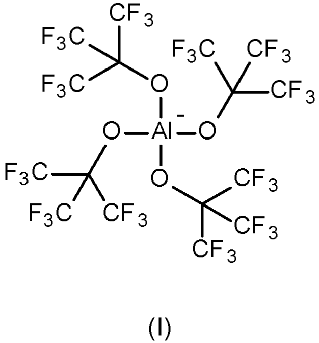 als durch Licht und/oder Radikale spaltbare kationische Initiatoren bei der Polymerisation kationisch polymerisierbarer Monomere.

Die Erfinder haben nämlich im Zuge ihrer Untersuchungen nicht nur festgestellt, dass sich das aus WO 99/12938 A1 bekannte Anion der Formel (I) - völlig unabhängig von seiner elektrischen Leitfähigkeit - auch für kationische Initiatoren eignet, wenn es mit gängigen Iodonium- oder Sulfonium-Kationen kombiniert wird, wie die Erfinder vermutet hatten, sondern überraschenderweise auch herausgefunden, dass diese neuen Initiatoren gängigen kationischen Iodonium- und Sulfoniumsalz-Photoinitiatoren in mehrerlei Hinsicht deutlich überlegen sind, wie die späteren Beispiele belegen.

In bevorzugten Ausführungsformen der Erfindung wird als Initiator entweder Diphenyliodonium-tetrakis(perfluor-t-butyloxy)aluminat der nachstehenden Formel (II): 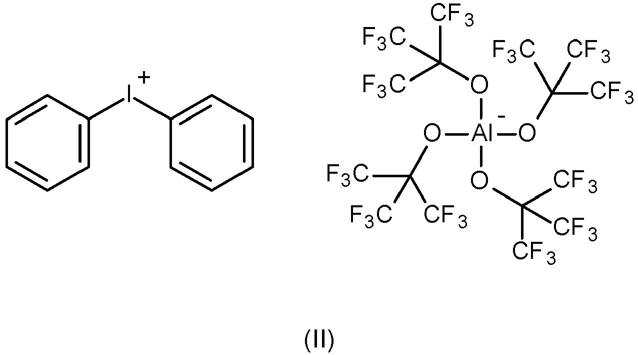 oder Triphenylsulfonium-tetrakis(perfluor-t-butyloxy)aluminat, gegebenenfalls mit Phenylthio oder 4-Diphenylsulfoniophenylthio substituiert, der nachstehenden Formel (III) : 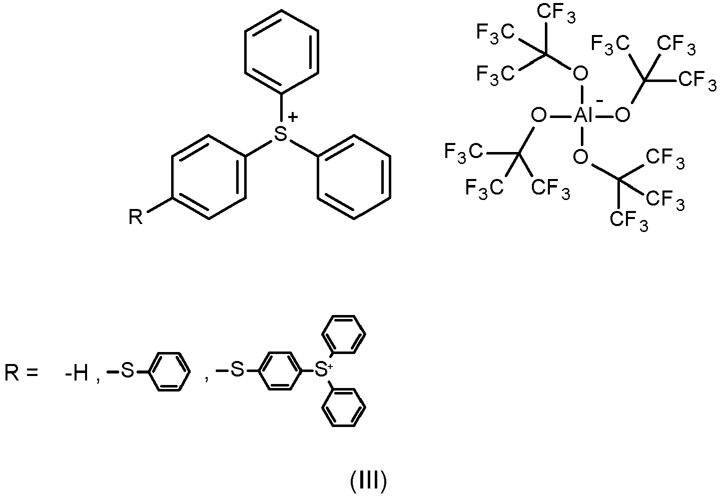 oder auch Tris(4-((4-acetylphenyl)thio)phenyl)sulfonium-tetrakis(perfluor-t-butyloxy)-aluminat der nachstehenden Formel (IV) 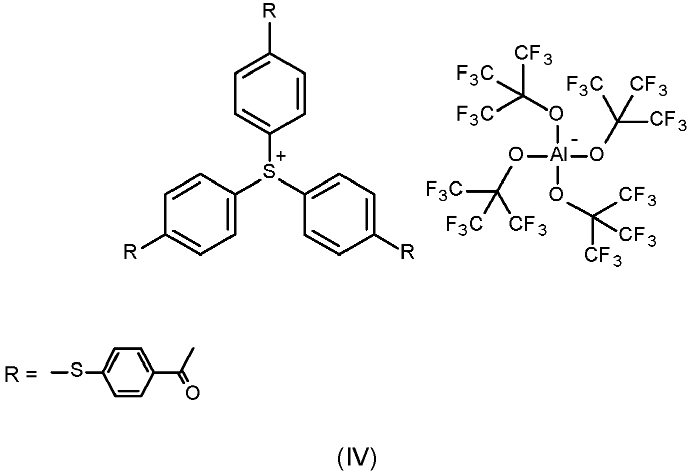 oder auch ein Gemisch davon eingesetzt, da diese Verbindungen bereits ausgezeichnete Egebnisse geliefert haben. Nichtsdestotrotz ist davon auszugehen, dass die dem Tetrakis(perfluor-t-butyloxy)aluminat-Anion der Formel (I) zuzuschreibenden Vorteile auch mit den anderen, auf dem Gebiet üblichen Aryliodonium- und -sulfonium-Kationen erzielbar sein werden, weswegen die vorliegende Erfindung nicht bloß auf die Verbindungen der Formeln (II) und (III) beschränkt sein soll. Beispielsweise referieren J. V. Crivello und K. Dietliker in "Photoinitiators for Free Radical Cationic & Anionic Photopolymerisation", Band 3, 2. Aufl., Wiley, 1999, über die Eigenschaften von literaturbekannten Kationen wie Ferrocenium, Triarylselenonium, Dialkyl-4-hydro-xyphenylsulfonium, Dialkylphenacylsulfonium, Dialkylacylsulfoxonium, Pyrylium und Thiopyrylium, von denen anzunehmen ist, dass zumindest manche davon in Kombination mit dem Tetrakis(perfluor-t-butyloxy)aluminat-Anion der Formel (I) vergleichbare Vorteile wie die Initiatoren der obigen Formeln (II) bis (IV) bieten können, so dass deren Verwendung als gleichwertig zu jener der oben dargestellten Kationen angesehen werden kann.

Das Verbindungsgemisch aus dem unsubstutiertem Triphenylsulfonium-Kation und den beiden mit Phenylthio bzw. 4-Diphenylsulfoniophenylthio substituierten Varianten davon ergibt sich aus dem später detailliert beschriebenen Herstellungsverfahren, zumal das Edukt Triphenylsulfoniumchlorid nur als Gemisch aus diesen drei Substitutionsvarianten (in wässriger Lösung) von Sigma Aldrich im Handel erhältlich ist und eine Trennung der drei Produkte nur unter hohem Aufwand möglich wäre. Aufgrund der hervorragenden Wirksamkeit des Gemischs ist eine solche Trennung daher bislang unterblieben.

Die kationische Polymerisation kann gemäß vorliegender Erfindung in üblicher und daher bevorzugter Weise als ringöffnende Polymerisation durchgeführt werden, wobei als kationisch polymerisierbare Monomere vorzugsweise ein- oder mehrwertige Epoxide (Oxirane), Thiirane (Episulfide), Oxetane, Lactame, Lactone, Lactid, Glykolid, Tetrahydrofuran oder Gemische davon eingesetzt werden, insbesondere ein oder mehrere mehrwertige Epoxide, die mit Abstand die häufigsten kationisch polymerisierten Monomere darstellen, oder als nicht-zyklische Monomere z.B. auch Vinylether.

Das zu polymerisierende Reaktionsgemisch kann zu dem in an sich bekannter Weise eine oder mehrere weitere Komponenten, ausgewählt aus zusätzlichen Initiatoren, zusätzlichen Monomeren, Sensibilisatoren, Stabilisatoren, Modifikatoren, Lösungsmitteln, Füllstoffen, Farbstoffen, Pigmenten und Gemischen davon umfassen, um den speziellen Anforderungen an die jeweiligen Polymerisate gerecht zu werden.

In bevorzugten Ausführungsformen umfasst das Gemisch weiters zumindest einen thermisch-radikalischen Initiator, so dass die Polymerisationsreaktion als Frontalpolymerisation oder auch als thermisch gestartete ionische Polymerisation durchgeführt werden kann, wie dies dem einschlägigen Fachmann bekannt ist.

In einem zweiten Aspekt der Erfindung wird durch die vorliegende Erfindung die neuen und in den Beispielen näher charakterisierten Substanzen Diphenyliodoniumtetrakis(perfluor-t-butyloxy)aluminat der Formel (II): 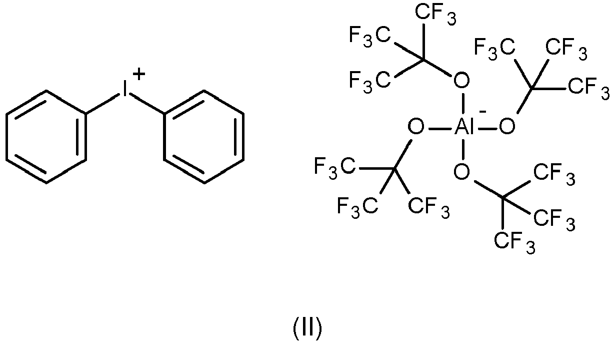 partiell mit Phenylthio und 4-Diphenylsulfoniophenylthio substituiertes Triphenylsulfonium-tetrakis(perfluor-t-butyloxy)aluminat der nachstehenden Formel (III): 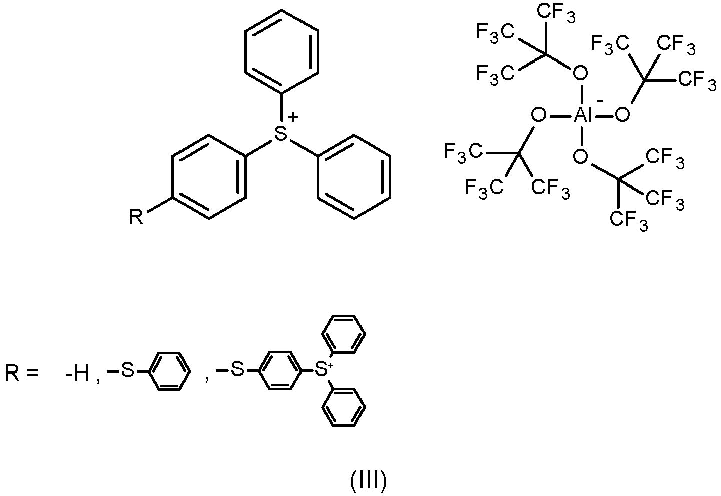 sowie Tris(4-((4-acetylphenyl)thio)phenyl)sulfonium-tetrakis(perfluor-t-butyloxy)aluminat der nachstehenden Formel (IV) 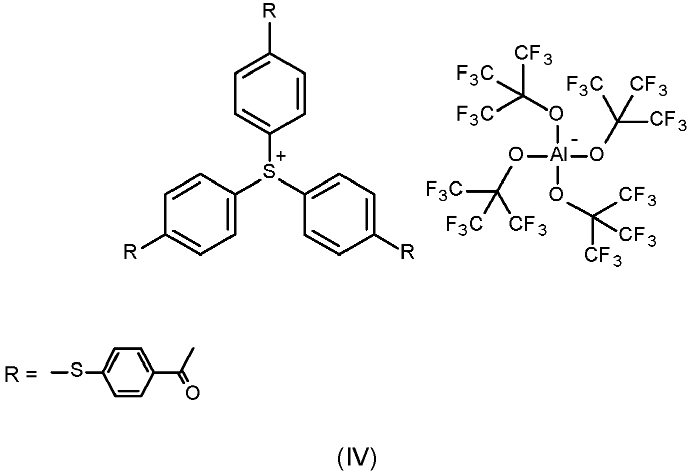 bereitgestellt, die von den Erfindern erstmalig hergestellt wurden und sich als hervorragende Intiatoren bei der Polymerisation kationisch polymerisierbarer Monomere erwiesen haben.

### KURZBESCHREIBUNG DER ZEICHNUNGEN

Die Figuren zeigen Vergleiche zwischen erfindungsgemäßen und bekannten Initiatoren bei Photo-DSC-Messungen, darunter die Fig. 1 und 2 in Bezug auf tₘₐₓ, die Fig. 3 und 4 in Bezug auf t_{95%} und die Fig. 5 und 6 in Bezug auf area, während die Fig. 7 bis 17 die aufgenommenen DSC-Kurven zeigen.

### BEISPIELE

Die vorliegende Erfindung wird durch die folgenden Beispiele konkret beschrieben, die allerdings nur zur Illustration der Ausführbarkeit der Erfindung angeführt werden und nicht als Einschränkung zu verstehen sind.

### Beispiel 1

Herstellung von Diphenyliodonium-tetrakis(perfluor-t-butyloxy)aluminat (II) (DPITTA)

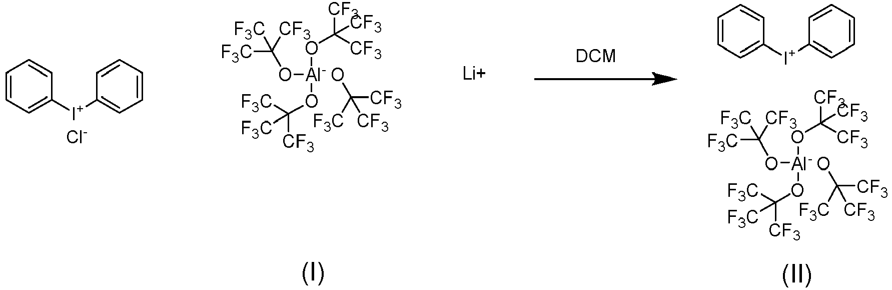

Die gesamte Reaktion wurde unter Argonatmosphäre und im Orangelichtlabor durchgeführt. Li[Al(OC(CF₃)₃)₄] (1,5622 g, 1,602 mmol; hergestellt) wurde in 35 ml CH₂Cl₂ vorgelegt, wobei keine homogene Lösung erhalten werden konnte. Iodoniumchlorid (0,55796 g, 1,762 mmol) wurde in 25 ml CH₂Cl₂ (DCM) suspendiert und im schwachen Argon-Gegenstrom in den Reaktionskolben übergeführt. Die bereits trübe Lösung färbte sich milchig-weiß. Nach 5 h wurden zur Verdünnung des Reaktionsgemischs weitere 20 ml CH₂Cl₂ zugesetzt, und die Reaktion wurde über Nacht gerührt. Anschließend wurde das Reaktionsgemisch in einen Scheidetrichter übergeführt und 3x mit je 40 ml Wasser extrahiert. Die organische Phase wurde über Kieselgel filtriert und das Lösungsmittel abgedampft, wonach eine mehrstündige Trocknung im Feinvakuum erfolgte. Das Produkt (1634,8 mg; 82 % d. Th.) wurde als weißer Feststoff erhalten.
¹H-NMR (200 MHz, CD₂Cl₂) δ (ppm): 7,58-7,70 (m, 2H), 7,79-7,89 (m, 1H), 7,94-8,03 (m, 2H).
¹³C-NMR (200 MHz, CD₂Cl₂) δ (ppm): 111,8 (*C*-I), 121,7 (q, C(*C*F₃), J=291,5 Hz), 134,4 (*m*), 135,1 (*p*), 135,5 (*o*).
²⁷Al-NMR (400 MHz, CD₂Cl₂) δ (ppm): 34,7.
DC: R_{f} (CH₂Cl₂) = 0,41
ATR-IR: 1470, 1449, 1351, 1296, 1273, 1239, 1205, 1165, 966, 831, 735, 724, 673, 548, 571, 560, 536 cm⁻¹.
Fp: 171-174 °C (CH₂Cl₂)

### Beispiel 2

Herstellung von Triphenylsulfonium-tetrakis(perfluor-t-butyloxy)aluminat, Diphenyl-(4-phenylthio)phenylsulfonium-tetrakis(perfluor-t-butyloxy)aluminat und Diphenyl-4-[(4-diphenylsulfonio)phenylthio]phenylsulfonium-tetrakis(perfluor-t-butyloxy)aluminat (III) (TASTTA)

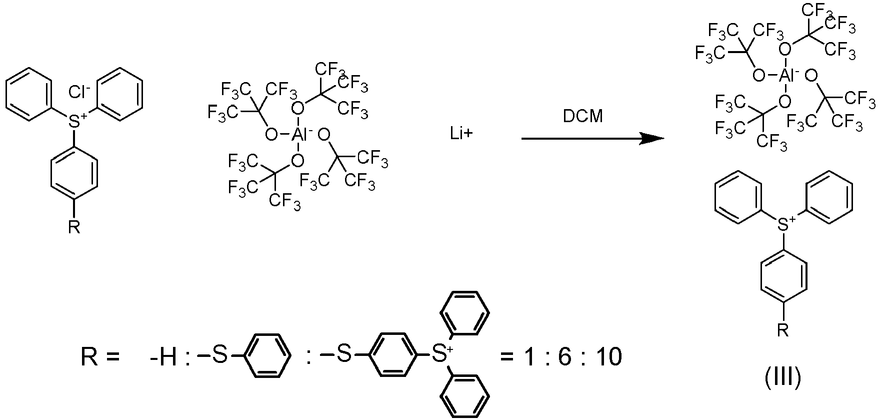

Die gesamte Reaktion wurde unter Argonatmosphäre und im Orangelichtlabor durchgeführt. Li[Al(OC(CF₃)₃)₄] (1,588 g, 1,626 mmol) wurde im Kolben vorgelegt und mit 120 ml CH₂Cl₂ versetzt, wobei keine vollständig homogene Lösung erhalten werden konnte. Eine 45%ige Triphenylsulfoniumchlorid-Lösung in Wasser, die laut Angaben des Lieferanten (Sigma Aldrich) die drei Verbindungen mit den oben dargestellten Substituenten R im Molverhältnis 1:6:10 enthielt, wurde über eine Spritze durch ein Septum in den Kolben zugesetzt. Die wässrige Phase färbte sich spontan weiß und verfestigte sich nach kurzer Zeit. Nach 5 Stunden wurden 15 ml Wasser zugesetzt, wobei der Feststoff in Lösung ging. Die Reaktion wurde über Nacht gerührt. Anschließend wurde das Reaktionsgemisch wurde in einen Scheidetrichter übergeführt und 3x mit je 40 ml Wasser extrahiert. Die organische Phase wurde über Kieselgel filtriert und das Lösungsmittel abgedampft, wonach eine mehrstündige Trocknung im Feinvakuum erfolgte. Das Produkt (1490,6 mg; 75 % d. Th.) wurde als weißer Feststoff erhalten.
¹H-NMR (200 MHz, CD₂Cl₂) δ (ppm): 7,93-7,82 (m, xH), 7,80-7,70 (m, 2H), 7,69-7,30 (m, 5H).
Eine exakte Zuordnung war wegen der starken Überlagerung nicht möglich. Aus demselben Grund können auch nur relative Integrale angegeben werden.
²⁷Al-NMR (400 MHz, CD₂Cl₂) δ (ppm): 34,7.
DC: R_{f}(CH₂Cl₂) = 0,76 und 0,42
ATR-IR: 1574, 1478, 1450, 1351, 1296, 1274, 1239, 1208, 1167, 1065, 968, 829, 817, 744, 725, 682, 559, 536 cm⁻¹.
Fp.: 164-167°C (CH₂Cl₂)

### Beispiele 3 bis 6, Vergleichsbeispiele 1 bis 6

### Reaktivitätstests der neuen Verbindungen als Photoinitiatoren

Die neuen Verbindungen der Formel (II), DPITTA, und Formel (III), TASTTA, wurden mittels Photo-DSC mit zwei verschiedenen kationisch polymerisierbaren Monomeren, CE und BADGE auf ihre Reaktivität als kationischer Photoinitiator untersucht und diese mit jener von allgemein gebräuchlichen Initiatoren, nämlich (4-Octyloxyphenyl)-(phenyl)iodonium-hexafluoroantimonat (IOC-8 SBF6), (4-Isopropylphenyl)(4'-methylphenyl)iodonium-tetrakis(pentafluorphenyl)borat (DAI-PFPB) und CYRACURE® UVI 6976 verglichen (vgl. die umseitigen Darstellungen). Sämtliche Arbeiten wurden unter Lichtschutz (Orangelicht) durchgeführt.

### Monomere:

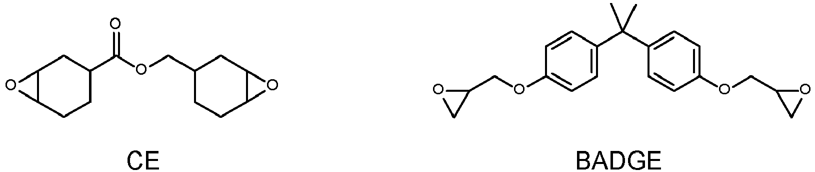

### Initiatoren:

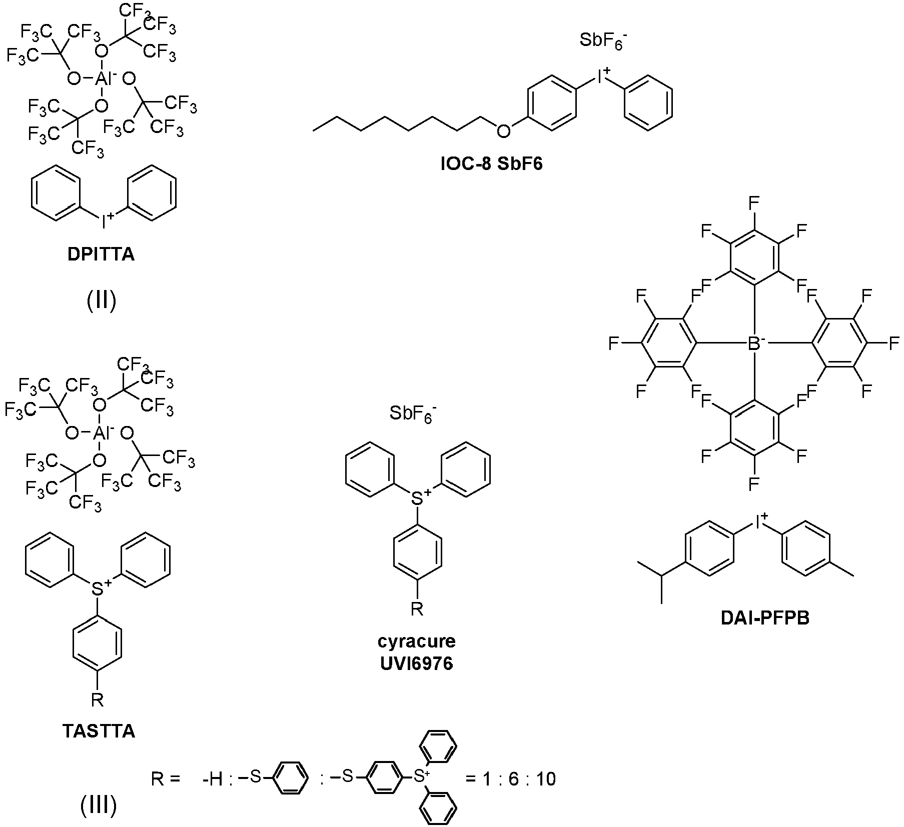

Für alle Formulierungen wurde je 1 Mol-% Initiator, bezogen auf Epoxygruppen, eingewogen und bei Raumtemperatur bis zum vollständigen Lösen magnetisch gerührt. Anschließend wurden je 10 mg der Reaktionsgemische in offene Aluminium DSC-Schälchen eingewogen.

Die DSC-Messungen erfolgten an einem NETSCH DSC 204 F1 Phönix unter Stickstoffatmosphäre bei 50 °C, die Bestrahlung mit einer Omnicure 2000-Quecksilberdampflampe mit einem Wellenlängenfilter von 320-500 nm. Die Intensität des UV-Lichts betrug 3 W/cm², die Bestrahlungsdauer betrug 5 Minuten. Alle Messungen wurden dreifach durchgeführt, und die gemittelten Werte sind in den nachstehenden Tabellen für das jeweilige Monomer angegeben.

Darin gibt tₘₐₓ die Zeit bis zum Erreichen des Maximums der Wärmeentwicklung (in s) an und ist somit ein Maß dafür, wie schnell der Gelpunkt und damit eine hohe Anfangsfestigkeit erreicht sind. Hierbei sind kurze Zeiten erstrebenswert. t_{95%} ist die Zeit (in s), nach der 95 % der gesamten Reaktionswärme freigesetzt waren, und ist also ein Maß für die Reaktionsgeschwindigkeit (wiederum sind niedrige Werte vorteilhaft). Und area ist die Fläche unter der Kurve und gibt die während der Polymerisation freigesetzte Reaktionswärme (in J) pro Gramm der jeweiligen Formulierung an. Diese ist daher ein Maß für den Reaktionsumsatz, weswegen hier möglichst hohe Werte erzielt werden sollten.

**Tabelle 1: CE**

| Beispiel | Initiator | tₘₐₓ [s] | t_{95%} [S] | area [J/g] |
|---|---|---|---|---|
| B3 | DPITTA | 16 | 504 | 227 |
| B4 | TASTTA | 11 | 348 | 342 |
| V1 | IOC8 | 37 | 350 | 270 |
| V2 | PFPB | 73 | 540 | 87 |
| V3 | UVI6976 | 17 | 509 | 258 |

**Tabelle 2: BADGE**

| Beispiel | Initiator | tₘₐₓ [s] | t_{95%} [S] | area [J/g] |
|---|---|---|---|---|
| B5 | DPITTA | 33 | 46 | 371₁₅ |
| B6 | TASTTA | 25 | 171 | 303 |
| V4 | IOC8 | 38 | 242 | 326 |
| V5 | PFPB | 84 | 355 | 275 |
| V6 | UVI6976 | 25 | 632 | 50 |

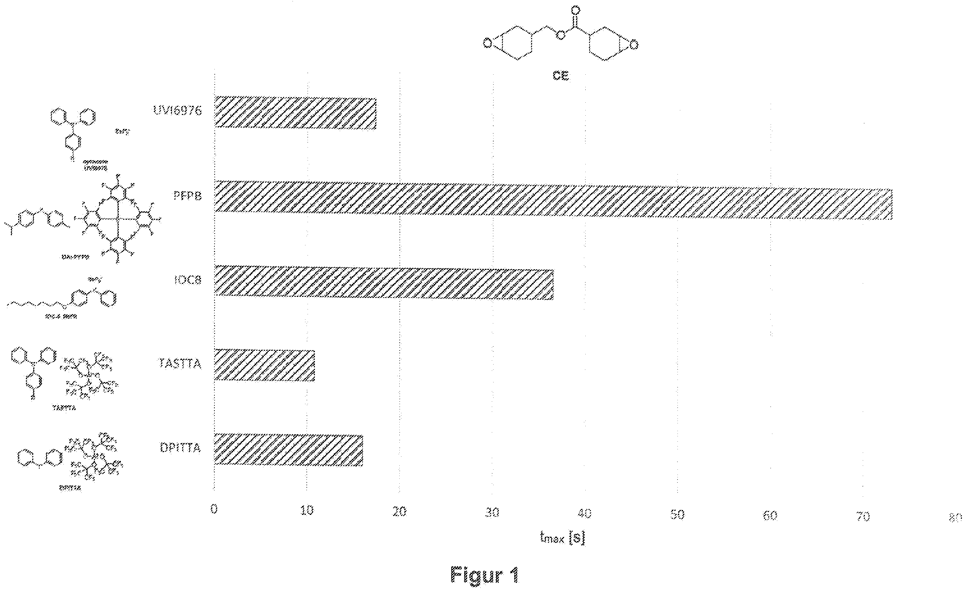

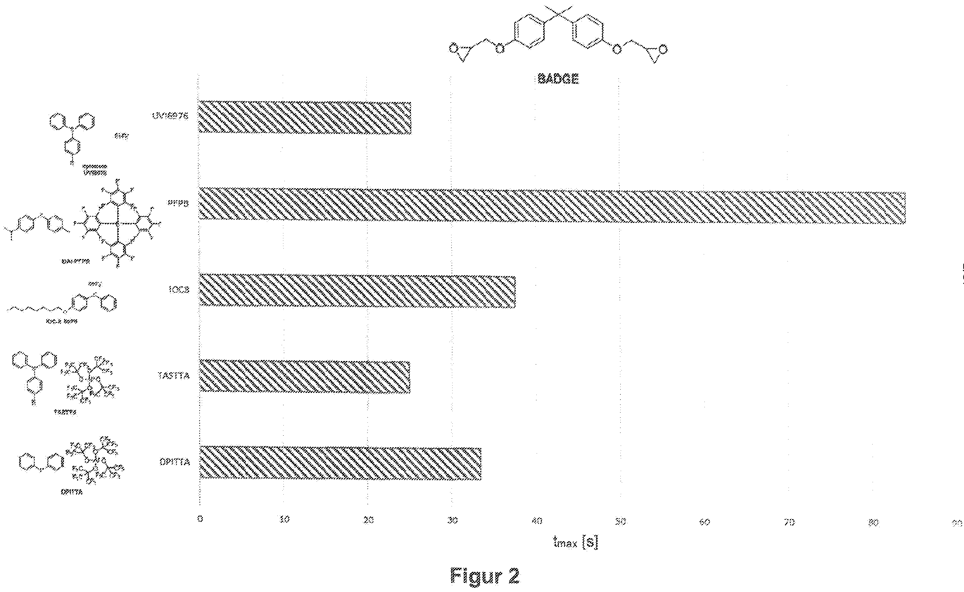

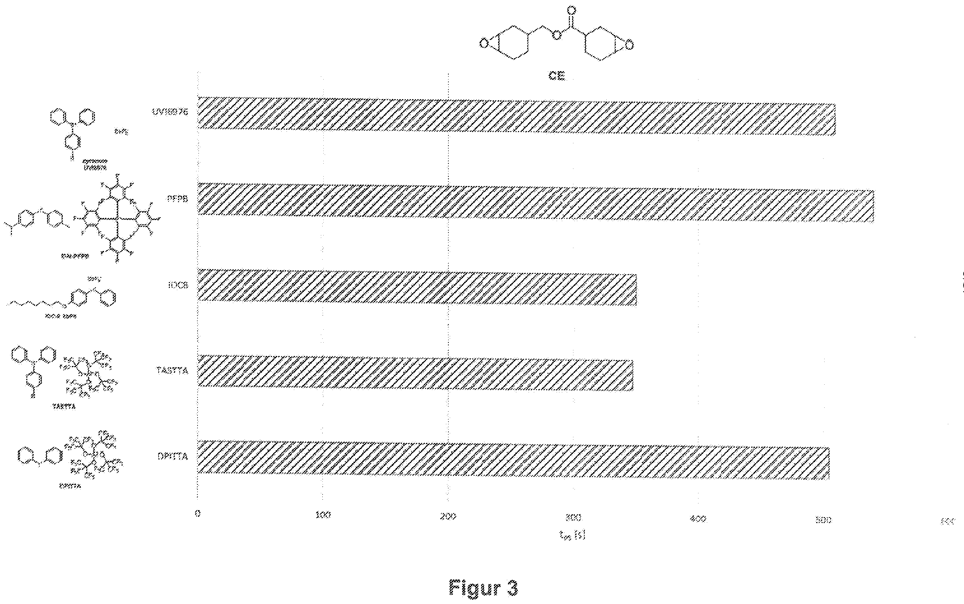

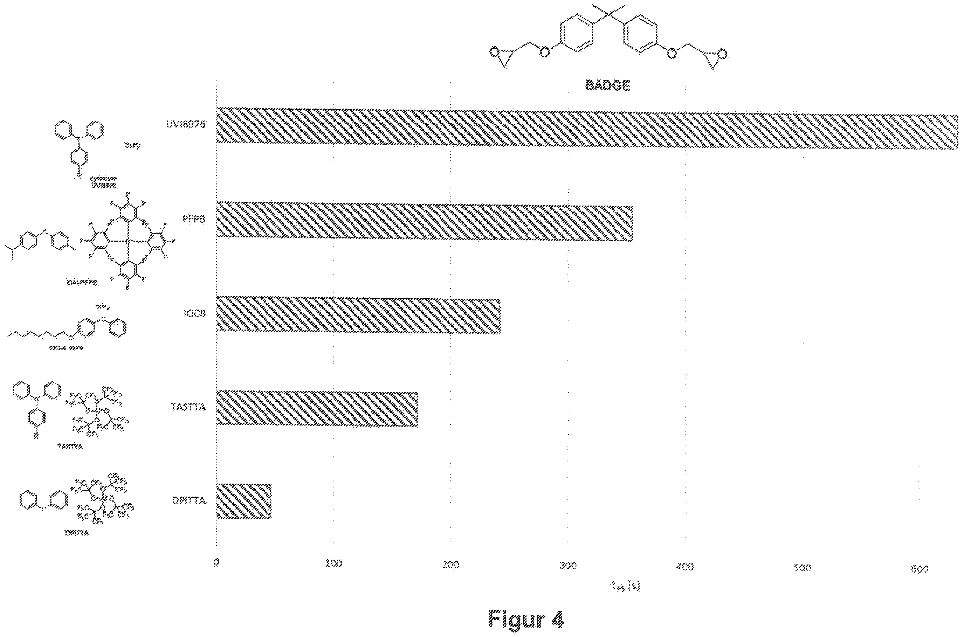

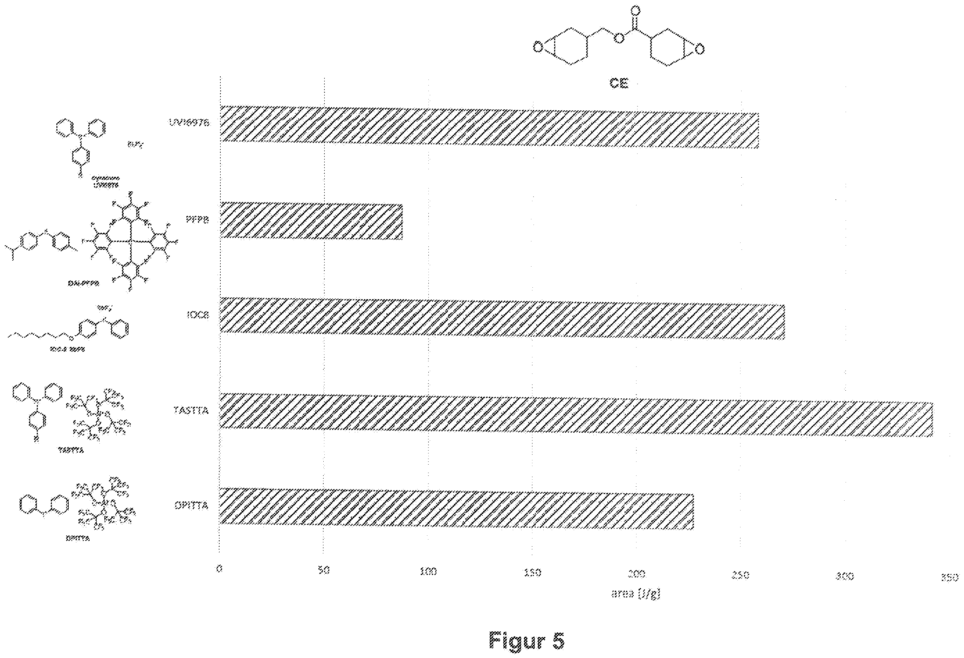

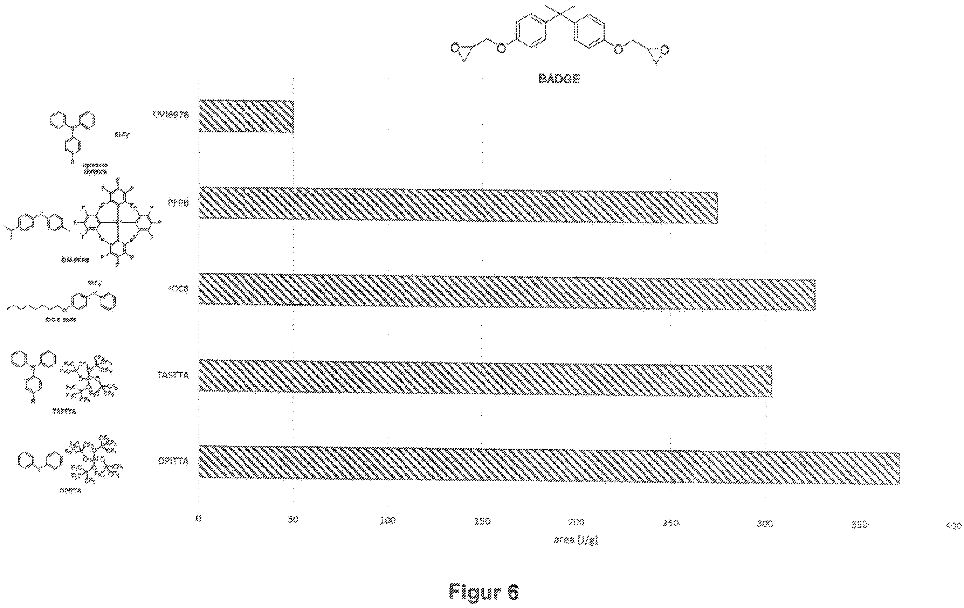

Zur besseren Übersicht sind die in den Tabellen 1 und 2 angeführten Ergebnisse auch für jeden der drei Reaktionsparameter einzeln in den Fig. 1 bis 6 grafisch dargestellt, d.h. in den Fig. 1 und 2 die Ergebnisse für tₘₐₓ, in den Fig. 3 und 4 jene für t_{95%} und in den Fig. 5 und 6 jene für area.

Aus Fig. 1, wo die Ergebnisse für tₘₐₓ unter Verwendung des Monomers CE grafisch dargestellt sind, geht klar hervor, dass TASTTA, der Initiator der Formel (III) mit Abstand die kürzeste Zeitspanne benötigt, um die maximale Wärmeentwicklung zu erreichen, gefolgt von DPITTA der Formel (II). Die erfindungsgemäßen Beispiele 3 und 4 schneiden in dieser Hinsicht mit 16 s bzw. 11 s demnach besser ab als alle drei Initiatoren nach dem Stand der Technik (17 s, 37 s, 73 s) - und das mitunter sogar deutlich.

Ein ähnliches Bild zeigt auch Fig. 2 für das BADGE-Monomer: Auch hier benötigt der TASTTA-Initiator aus Beispiel 6 die kürzeste Zeitspanne zum Erreichen von tₘₐₓ, in diesem Fall allerdings gleichauf mit CYRACURE® UVI 6976 aus Vergleichsbeispiel 6 (beide 25 s) und knapp vor DPITTA aus Beispiel 5 (33 s). Deutlich länger benötigten wiederum die beiden bekannten Initiatoren IOC8 (38 s) und vor allem PFPB (84 s).

In den Fig. 3 und 4 sind die Ergebnisse für t_{95%} für die beiden Monomere dargestellt. Im Falle von CE in Fig. 3 liegt TASTTA aus dem erfindungsgemäßen Beispiel 4 erneut voran (348 s), dicht gefolgt von IOC8 aus Vergleichsbeispiel 1 (350 s) und mit größerem Abstand von DPITTA aus Beispiel 3 (504 s), UVI 6976 aus Vergleichsbeispiel 3 (509 s) und erneut PFPB aus Vergleichsbeispiel 4 an letzter Stelle (540 s).

In Fig. 4 sind die Verhältnisse allerdings überraschenderweise gänzlich andere. Mit BADGE als Monomer liegt DPITTA aus Beispiel 5 mit großem Abstand voran (46 s), gefolgt von TASTTA aus Beispiel 6 (171 s). Der beste bekannte Initiator war zwar auch in diesem Fall IOC8 aus Vergleichsbeispiel 4, bei dem es allerdings mit 242 s mehr als fünfmal so lange dauerte, bis 95 % der gesamten Reaktionswärme freigesetzt waren. Dahinter liegen PFPB mit 355 s (Vergleichsbeispiel 5) und deutlich abgeschlagen in diesem Fall UVI 6976 aus Vergleichsbeispiel 6 (632 s).

Ähnlich zu den Ergebnissen für t_{95%} sind auch jene für area, also die Fläche unter der Kurve, die die freigesetzte Reaktionswärme angibt und damit ein Maß für den Umsatz darstellt. Wie aus Fig. 5 zu entnehmen liegt für CE als Monomer TASTTA aus Beispiel 4 voran, dahinter mit IOC8 und UVI 6976 zwei bekannte Initiatoren noch vor DPITTA und PFPB weit abgeschlagen. In Fig. 6 für BADGE liegt hingegen DPITTA aus Beispiel 5 deutlich voran, gefolgt von IOC8, TASTTA und PFPB und schließlich UVI 6976 weit dahinter.

Somit zeigen die Fig. 1 bis 6 ganz klar, dass bei jedem der drei gemessenen Parameter eine Ausführungsform der Erfindung - oft mit großem Vorsprung - am besten abschnitt.

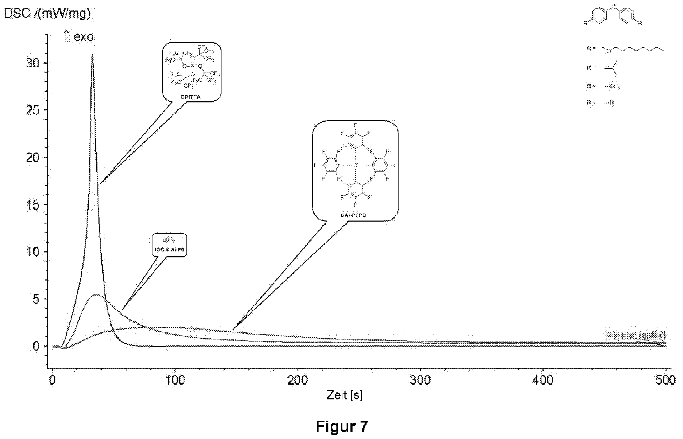

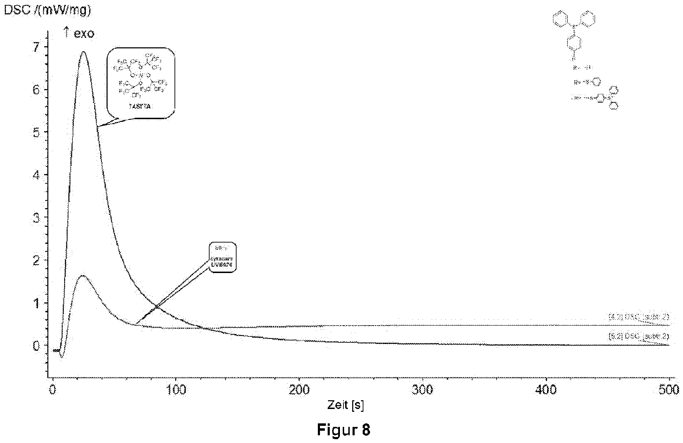

In den Fig. 7 und 8 werden abschließend die beiden Ausführungsformen der Erfindung jeweils mit den strukturell ähnlichen bekannten Initiatoren, d.h. Iodonium- (Fig. 7) bzw. Sulfoniumsalzen (Fig. 8) anhand der DSC-Kurven verglichen, in denen die Wärmeentwicklung (in mW/mg) als Maß für die Geschwindigkeit der Polymerisationsreaktion über der Zeit (in s) aufgetragen ist.

Sowohl in Fig. 7, wo DPITTA zusammen mit den beiden bekannten Initiatoren auf lodoniumionen-Basis, IOC8 und PFPB, aufgetragen ist, als auch in Fig. 8 für die Sulfonium-Initiatoren TASTTA und UVI 6976 zeigt sich ein ähnliches Bild: Die gemäß vorliegender Erfindung durchgeführte Polymerisation startet deutlich rascher und ist auch nach weitaus kürzerer Zeit im Wesentlichen abgeschlossen als unter Verwendung von Initiatoren nach dem Stand der Technik.

### Beispiele 7 und 8, Vergleichsbeispiele 7 bis 10

In dieser Beispielsgruppe wurde der neu entwickelte Photoinitiator der Formel (II), DPITTA, erneut mittels Photo-DSC-Messungen mit zwei weiteren bekannten Initiatoren, nämlich DPI-PFPB und DPI-SbF₆, bei der Härtung zweier weiterer bekannter difunktioneller Monomere, BOB und BVC, allesamt wie nachstehend dargestellt, verglichen.

### Monomere:

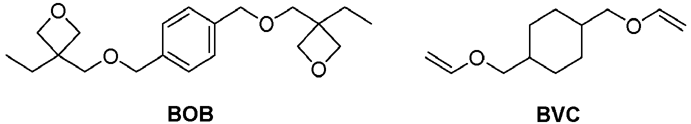

### Initiatoren:

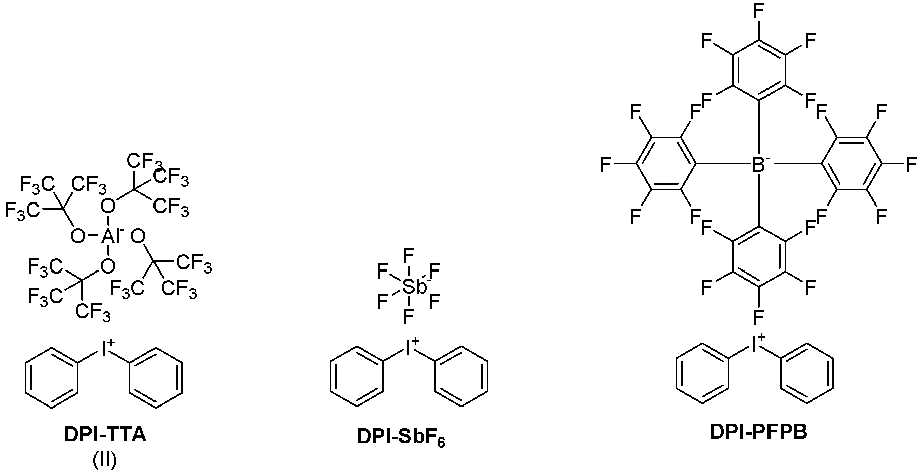

Für alle Formulierungen wurde je 1 Mol-% Initiator, bezogen auf polymerisierbare Gruppen, eingewogen und bei Raumtemperatur bis zum vollständigen Lösen magnetisch gerührt. Anschließend wurden je 14 mg der Reaktionsgemische in offene Aluminium-DSC-Schälchen eingewogen und die Schälchen mit Deckgläsern bedeckt.

Die DSC-Messungen erfolgten an einem NETSCH DSC 204 F1 Phönix unter Stickstoffatmosphäre bei 50 °C, die Bestrahlung mit einer Omnicure 2000-Quecksilberdampflampe mit einem Wellenlängenfilter von 320-500 nm. Die Intensität des UV-Lichts betrug 1 W/cm², die Bestrahlungsdauer betrug 9 Minuten. Alle Messungen wurden dreifach durchgeführt, und die gemittelten Werte sind in den nachstehenden Tabellen 3 und 4 für das jeweilige Monomer angegeben.

Wie in den Beispielen 3 bis 6 gibt tₘₐₓ die Zeit bis zum Erreichen des Maximums der Wärmeentwicklung (in s) an und ist somit ein Maß dafür, wie schnell der Gelpunkt und damit eine hohe Anfangsfestigkeit erreicht sind, wobei kurze Zeiten erstrebenswert sind, und t_{95%} ist die Zeit (in s), nach der 95 % der gesamten Reaktionswärme freigesetzt waren, und ist also ein Maß für die Reaktionsgeschwindigkeit, wobei wiederum niedrige Werte vorteilhaft sind. In der vorliegenden Beispielsgruppe wurden darüber hinaus die Fläche unter den Photo-DSC-Kurven anhand von bekannten Werten für die theoretische Polymerisationswärme der Monomere in den Polymerisationsumsatz C (in %) umgerechnet. Und Rₚ gibt die Polymerisationsrate an, die ebenfalls direkt aus den Photo-DSC-Ergebnissen abgeleitet wurde.

**Tabelle 3: BOB**

| Beispiel | Initiator | C [%] | tₘₐₓ [s] | t_{95%} [S] | Rₚ [mol·l⁻¹·s⁻¹] |
|---|---|---|---|---|---|
| B7 | DPITTA | 72,5 | 24,3 | 68 | 0,130 |
| V7 | DPI-PFPB | 64,7 | 25,9 | 85 | 0,067 |
| V9 | DPI-SbF₆ | 68,3 | 28,7 | 87 | 0,068 |

Im Dioxetan-Harz BOB, zeigt der neue Initiator DPITTA bei sämtlichen Parametern klar sein überlegenes Polymerisationsverhalten im Vergleich zu den beiden anderen Initiatoren. Es wurden Umsätze von über 72 % erreicht, was um 6 % bzw. 12 % über den mit DPI-SbF₆ (rund 68 %) und DPI-PFPB (rund 65 %) erzielten Werten liegt. Das Peakmaximum wird mit DPITTA ebenfalls am raschesten erreicht, und die t_{95%}-Werte sind bei diesem Initiator deutlich niedriger als mit den Vergleichsinititoren. Am stärksten treten die Vorteile von DPITTA jedoch bei der Polymerisationsrate zutage, die nahezu doppelt so hoch ausfiel wie bei DPI-PFPB und DPI-SbF₆.

**Tabelle 4: BVC**

| Beispiel | Initiator | C [%] | tₘₐₓ [s] | t_{95%} [S] | Rp [ mol·l⁻¹·s⁻¹] |
|---|---|---|---|---|---|
| B8 | DPITTA | 83,7 | 7,0 | 24 | 0,517 |
| V8 | DPI-PFPB | 88,3 | 7,1 | 24 | 0,543 |
| V10 | DPI-SbF6 | 77,8 | 7,1 | 24 | 0,516 |

Die in Tabelle 4 angeführten, mit dem Vinylether-Monomer BVC erhaltenen Werte waren für alle drei getesteten Initiatoren ähnlich oder sogar (nahezu) gleich. Dies liegt allerdings daran, dass die kationische Polymerisation von Vinylethern generell äußerst rasch abläuft, weswegen hier kaum Unterschiede zu beobachten waren.

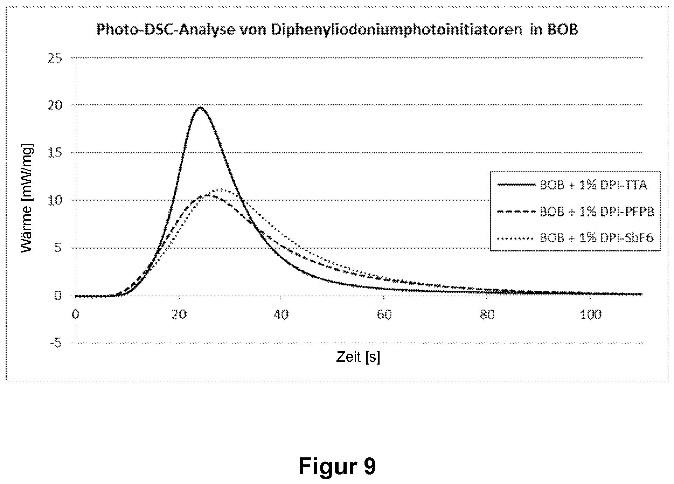

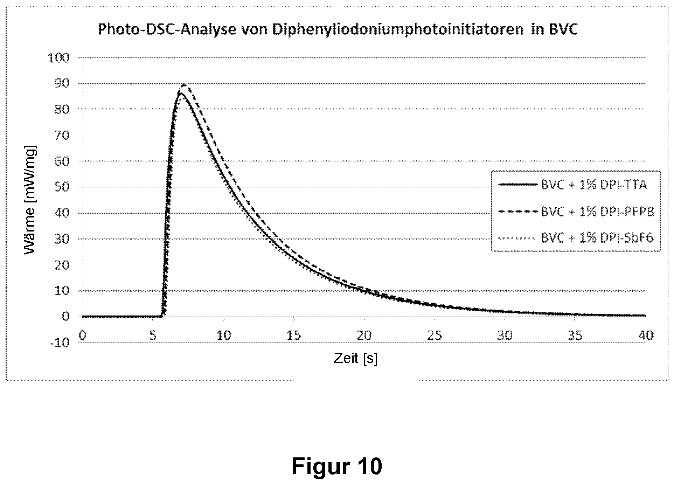

In den Fig. 9 und 10 werden die beiden Ausführungsformen der Erfindung der Beispiele 7 und 8 jeweils mit den strukturell ähnlichen bekannten Diphenyliodonium-Initiatoren in BOB (Fig. 9) bzw. BVC (Fig. 10) anhand der DSC-Kurven verglichen, in denen die Wärmeentwicklung (in mW/mg) als Maß für die Geschwindigkeit der Polymerisationsreaktion über der Zeit (in s) aufgetragen ist.

Sowohl in Fig. 9, wo DPITTA zusammen mit den beiden bekannten Initiatoren auf lodoniumionen-Basis, DPI-PFPB und DPI-SbF6, in BOB aufgetragen ist, als auch in Fig. 10 für die Initiatoren im Monomer BVC zeigt sich ein ähnliches Bild: Die gemäß vorliegender Erfindung durchgeführte Polymerisation startet deutlich rascher und ist auch nach weitaus kürzerer Zeit im Wesentlichen abgeschlossen als unter Verwendung von Initiatoren nach dem Stand der Technik.

### Beispiel 9

Herstellung von Tris(4-((4-acetylphenyl)thio)phenyl)sulfonium-tetrakis(perfluor-t-butyl-oxy)aluminat (IV) (TAPS-TTA)

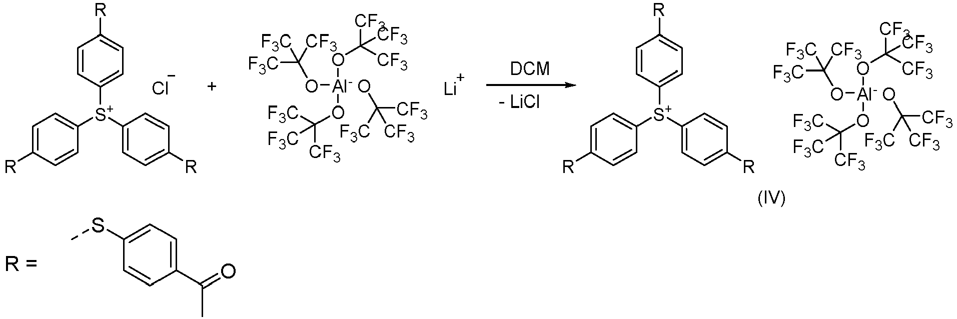

Die obige Reaktion wurde im Orangelichtlabor unter Argonatmosphäre durchgeführt. In einem Rollrandfläschchen mit einem Magnetrührstäbchen wurde Lithium-tetrakis-(perfluor-t-butyloxy)aluminat (77,16 mg, 0,0792 mmol) vorgelegt, mit einem Septum und Aluminiumkappe verschlossen und in 9 ml Dichlormethan unter Rühren gelöst. In einem separaten Gefäß wurde Tris(4-((4-acetylphenyl)thio)phenyl)sulfoniumchlorid (59,63 mg, 0,0796 mmol) in 2 ml Dichlormethan gelöst, mittels Spritze zur Reaktionslösung zugetropft und mit 1 ml CH₂Cl₂ nachgewaschen. Dabei wurde das Ausfallen eines weißen Niederschlages beobachtet. Die Reaktion wurde über Nacht gerührt und danach mittels DC (Laufmittel: CH₂Cl₂) kontrolliert. Zur Aufarbeitung wurde das Reaktionsgemisch in einen Scheidetrichter übergeführt und dreimal mit 5 ml Wasser extrahiert. Das Lösungsmittel der organischen Phase wurde am Rotationsverdampfer abgezogen, und der Rückstand wurde bei 4 °C über Nacht im Kühlschrank gelagert, um Kristallisation zu ermöglichen. Im Anschluss erfolgte eine 4-stündige Trocknung am Feinvakuum. Das Produkt (106 mg, 80 % d.Th.) konnte als weißer Feststoff erhalten werden.
¹H-NMR (200 MHz, CDCl₃) δ (ppm): 8,00 (d, 6H, J=8,60 Hz, Ar), 7,59 (d, 6H, J=8,60 Hz, Ar), 7,34 (d, 6H, J=8,56 Hz, Ar), 7,26 (d, 6H, J=9,00 Hz, Ar), 2,62 (s, 9H, CH₃). DC (CH₂Cl₂) R_{f} = 0,15

### Beispiele 10 und 11, Vergleichsbeispiele 11 bis 14

In Analogie zu den Diphenyliodonium-Photoinitiatoren wurden auch der substituierte Triarylsulfoniumphotoinitiator (IV), TAPS-TTA, mittels Photo-DSC mit bekannten Initiatoren nach dem Stand der Technik verglichen, nämlich TAPS-TFSM und TAPS-PFPB, die unter den Handelsnamen Irgacure GSID-26-1 bzw. Irgacure 290 als Hochleistungsphotoinitiatoren für industrielle Anwendungen im Handel erhältlich sind. Alle drei Initiatoren umfassen denselben kationischen Chromophor ("TAPS") mit den gleichen Lichtabsorptionseigenschaften, weswegen hier direkt der Einfluss des Anions auf das Polymerisationsverhalten und die Initiierungseffizienz verglichen werden kann. Als Monomere kamen wie in den Beispielen 3 bis 6 CE und BADGE zum Einsatz.

### Monomere:

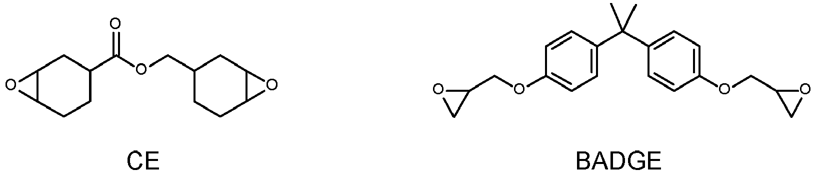

### Initiatoren:

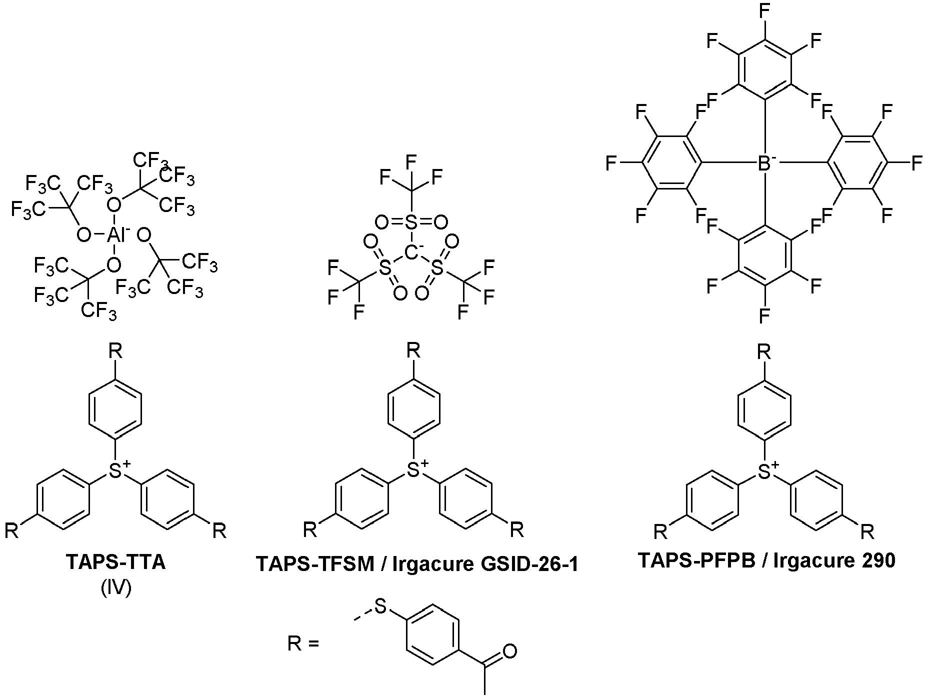

Die Versuchsparameter waren dieselben wie in den obigen Beispielen 7 und 8, mit der einzigen Ausnahme dass als Bestrahlungsintensität 3 W/cm² eingestellt wurden. Die Ergebnisse sind in den nachstehenden Tabellen 5 und 6 wiederum als Mittelwerte von Dreifachbestimmungen angegeben.

**Tabelle 5: CE**

| Beispiel | Initiator | C [%] | tₘₐₓ [s] | t_{95%} [s] | Rp [mol·l⁻¹·s⁻¹] |
|---|---|---|---|---|---|
| B10 | TAPS-TTA | 42,6 | 10,6 | 216 | 0,076 |
| V11 | TAPS-PFPB | 42,6 | 10,1 | 254 | 0,076 |
| V13 | TAPS-TFSM | 40,2 | 12,4 | 232 | 0,071 |

Während die Ergebnisse für C, tₘₐₓ und Rₚ vergleichbar bzw. (nahezu) identisch waren, zeigt der erfindungsgemäße Initiator TAPS-TTA bei t_{95%} seine Überlegenheit: Die Zeit bis zum Erreichen von 95 % Umsatz ist hier deutlich kürzer, weswegen dieser neue Initiator insgesamt sogar besser abschneidet als industrielle Hochleistungsinitiatoren.

**Tabelle 6: BADGE**

| Beispiel | Initiator | C [%] | tₘₐₓ [s] | t_{95%} [s] | Rp [mol·l⁻¹·s⁻¹] |
|---|---|---|---|---|---|
| B11 | TAPS-TTA | 64,3 | 16,8 | 240 | 0,049 |
| V12 | TAPS-PFPB | 62,1 | 17,1 | 243 | 0,046 |
| V14 | TAPS-TFSM | 54,4 | 16,1 | 237 | 0,042 |

Bei ansonsten vergleichbaren Werten erzielt der neue Initiator gemäß vorliegender Erfindung den höchsten Umsatz und schneidet somit auch mit diesem Monomer besser ab als die beiden industriellen Initiatoren.

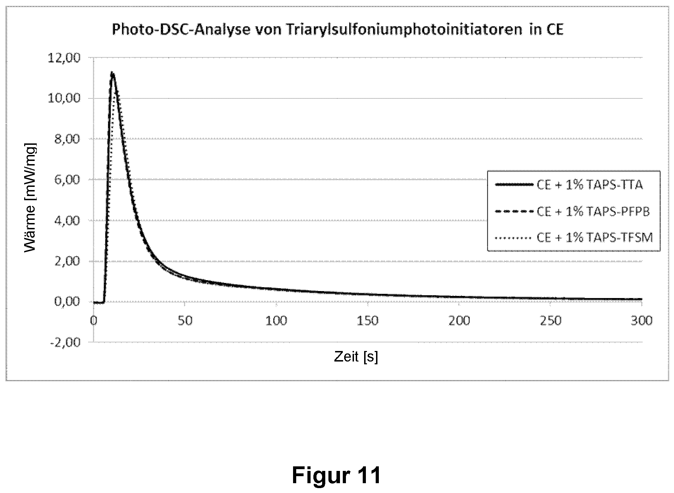

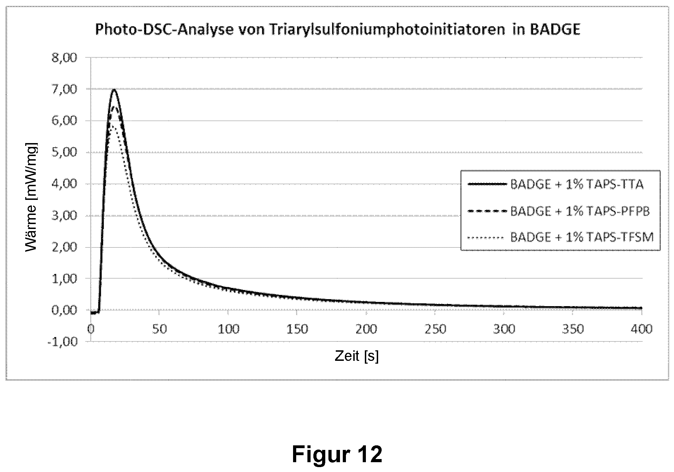

In den Fig. 11 und Fig. 12 werden die Photo-DSC-Kurven der drei Initiatoren bezüglich der Wärmeentwicklung in CE (Fig. 11) bzw. BADGE (Fig. 12) verglichen. In beiden Fällen zeigte sich die stärkste Wärmeentwicklung für die Ausführungsform der vorliegenden Erfindung (in BADGE gleichauf mit TAPS-PFPB).

### Beispiele 12 bis 17, Vergleichsbeispiele 15 bis 20

Da Diphenyliodoniumphotoinitiatoren in einem Wellenlängenbereich unterhalb von 250 nm besonders gut absorbieren, werden häufig Sensitizer zugesetzt, die eine Photoinitiierung mit einer Strahlung bei 400-500 nm aussendenden Lichtquelle ermöglichen. Aus diesem Grund wurde als Lichtquelle in der Photo-DSC-Versuchsanordnung eingesetzte Omnicure S2000-Helium-Mitteldrucklampe mit einem für Licht mit 400-500 nm Wellenlänge durchlässigen Filter versehen. Mit den beiden Photoinitiatoren DPITTA und DPI-SbF₆ wurden photosensitive Formulierungen mit unterschiedlichen Konzentrationen zweier Sensitizer, Isopropylthioxanthon (ITX) und Perylen, im Monomer BADGE hergestellt. Die Photo-DSC-Messungen wurden analog zu den Beispielen 10 und 11 mit einer Intensität von 3 W/cm² durchgeführt, und die Ergebnisse sind in den nachstehenden Tabellen 7 bis 12 angegeben.

Zunächst wurden Formulierungen der beiden Initiatoren und ohne Sensitizer mit der neuen Lampe bestrahlt. Die Ergebnisse sind in Tabelle 7 angegeben.

**Tabelle 7: Photo-DSC-Analyse ohne Sensitizer bei 400-500 nm**

| Beispiel | Initiator | C [%] | tₘₐₓ [s] | t_{95%} [s] | Rp [mol·l⁻¹·s⁻¹] |
|---|---|---|---|---|---|
| B12 | DPITTA | 45 | 166 | 297 | 0,007 |
| V15 | DPI-SbF₆ | - | - | - | - |

Während für DPI-SbF₆ keinerlei Polymerisationsreaktion festzustellen war, erzielte DPITTA sogar ohne Sensitizer rund 45 % Umsatz,

Als nächstes wurden 0,05 % bzw. 0,10 % ITX als Sensitizer zugesetzt.

**Tabelle 8: Photo-DSC-Analyse mit 0,05 % ITX bei 400-500 nm**

| Beispiel | Initiator | C [%] | tₘₐₓ [s] | t_{95%} [s] | Rp [mol·l⁻¹·s⁻¹] |
|---|---|---|---|---|---|
| B13 | DPITTA | 95 | 16 | 32 | 0,382 |
| V16 | DPI-SbF₆ | 83 | 17 | 31 | 0,299 |

**Tabelle 9: Photo-DSC-Analyse mit 0,10 % ITX bei 400-500 nm**

| Beispiel | Initiator | C [%] | tₘₐₓ [s] | t_{95%} [s] | Rp [mol·l⁻¹·s⁻¹] |
|---|---|---|---|---|---|
| B14 | DPITTA | 92 | 15 | 30 | 0,368 |
| V17 | DPI-SbF₆ | 85 | 15 | 30 | 0,344 |

Man erkennt, dass gemäß vorliegender Erfindung - bei vergleichbarem Zeitverlauf - einerseits eine deutlich (Beispiel 13) bzw. etwas (Beispiel 14) höhere Polymerisationsrate, andererseits aber vor allem signifikant höhere Umsätze erzielt werden.

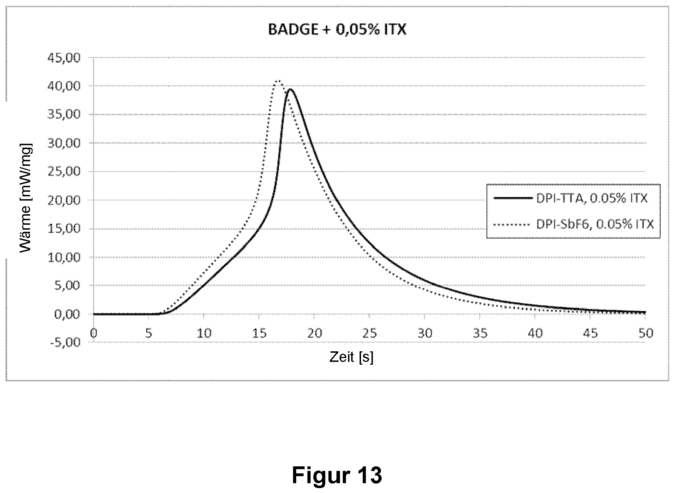

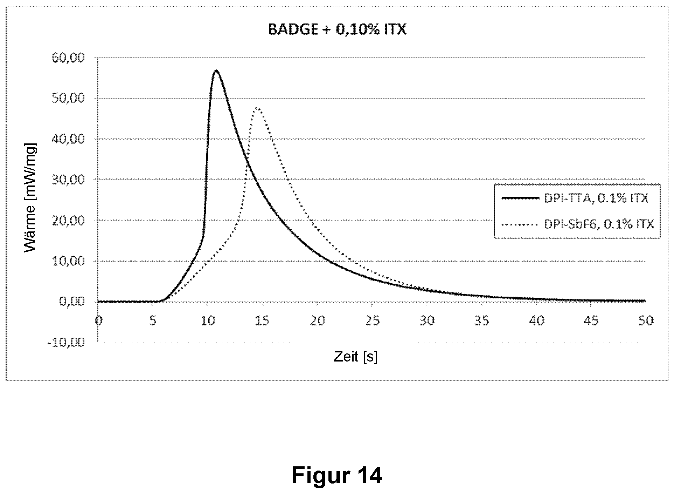

In den Fig. 13 und 14 wird wiederum die Wärmeentwicklung der Reaktionen verglichen, wobei im ersten Fall bei niedrigerer ITX-Konzentration der bekannte Initiator unerwarteterweise leicht voran liegt, bei Verdopplung der Sensitizermenge aber die Initiierung durch DPITTA deutlich rascher und intensiver erfolgt.

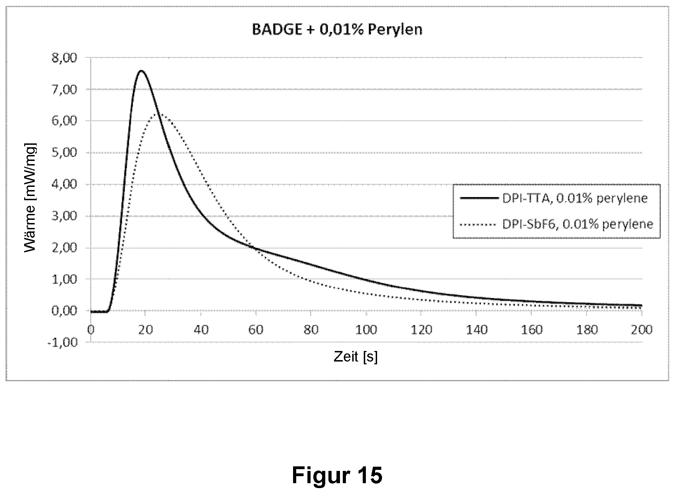

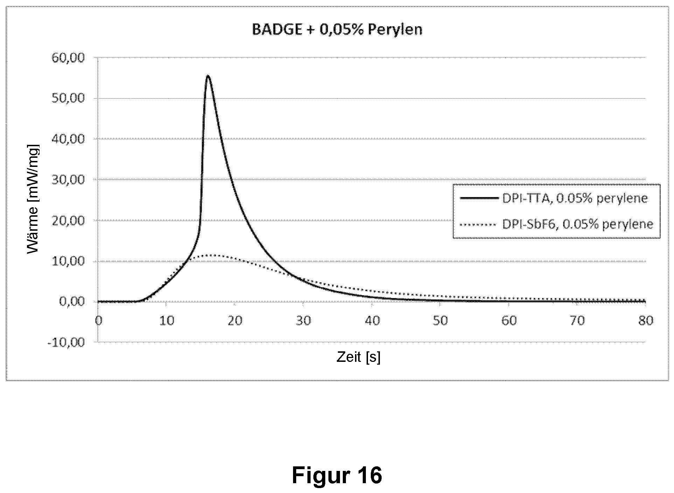

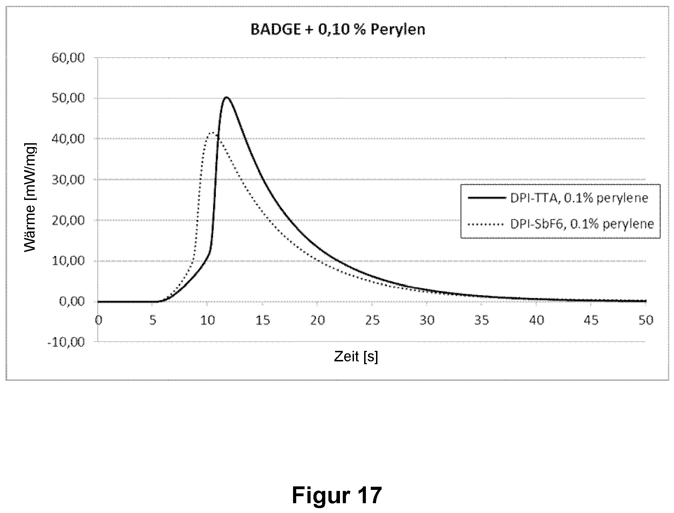

In weiterer Folge wurden die beiden Initiatoren mit drei verschiedenen Konzentrationen von Perylen als Sensitizer kombiniert, nämlich 0,01 %, 0,05 % und 0,10 %, da das Absorptionsspektrum von Perylen sich gut mit dem Emissionsspekrum der Omnicure-Lampe deckt, was eine niedrigere Konzentration des Sensitizers gestattet. Die Ergebnisse sind in den folgenden Tabellen 10 bis 12 und in den Fig. 15 bis 17 angeführt.

**Tabelle 10: 0,01 % Perylen**

| Beispiel | Initiator | C [%] | tₘₐₓ [s] | t_{95%} [s] | Rp [mol·l⁻¹·s⁻¹] |
|---|---|---|---|---|---|
| B15 | DPITTA | 67 | 18 | 180 | 0,052 |
| V18 | DPI-SbF₆ | 60 | 24 | 132 | 0,047 |

**Tabelle 11: 0,05 % Perylen**

| Beispiel | Initiator | C [%] | tₘₐₓ [s] | t_{95%} [s] | Rp [mol·l⁻¹·s⁻¹] |
|---|---|---|---|---|---|
| B16 | DPITTA | 92 | 16 | 32 | 0,400 |
| V19 | DPI-SbF₆ | 67 | 17 | 159 | 0,087 |

**Tabelle 12: 0,10 % Perylen**

| Beispiel | Initiator | C [%] | tₘₐₓ [s] | t_{95%} [s] | Rp [mol·l⁻¹·s⁻¹] |
|---|---|---|---|---|---|
| B17 | DPITTA | 89 | 12 | 30 | 0,373 |
| V20 | DPI-SbF₆ | 82 | 10 | 49 | 0,299 |

Aus den Tabellen 10 bis 12 und den Figuren 15 bis 17 ist klar ersichtlich, dass DPITTA dem bekannten Initiator DPI-SbF₆ insgesamt gesehen in allen untersuchten Parametern überlegen ist.

DPITTA liefert demnach auch in Gegenwart von Sensitizern die besseren Ergebnisse als der handelsübliche Vergleichsinitiator.

### Beispiel 18 - Anwendungsbeispiel "chemischer Dübel"

Chemische Dübel sind Formulierungen, die die Fixierung von Schrauben, Bolzen, Gewindestangen und dergleichen in Bohrlöchern erlauben. Dabei kann man entweder zwischen schneller Reaktionsgeschwindigkeit und kurzer Topfzeit oder langer Topfzeit gepaart mit dem Nachteil einer sehr langen Reaktionszeit wählen. Der Einsatz von Formulierungen, die mittels radikalinduzierter, kationischer Frontalpolymerisation (RICFP) ausgehärtet werden können, als Masse für chemische Dübel ist daher vorteilhaft, da er lange Topfzeit mit sehr schneller Aushärtung kombiniert. Die Initiierung der Reaktion kann dabei entweder durch Bestrahlung mit (UV-)Licht oder durch lokale Applikation von Hitze (beispielsweise durch einen Lötkolben oder eine Heißluftpistole) möglich.

### Formulierung

Eine typische Formulierung dafür besteht aus einem Epoxidharz, wie z.B. Bisphenol-A-diglycidylether, einem kationischen Photoinitiator, wie z.B. dem erfindungsgemäßen Initiator DPITTA, und einem radikalischen thermischen Initiator, wie z.B. Benzpinakol. Für die Herstellung der Formulierung werden die Initiatoren in einer möglichst geringen Menge an Dichlormethan gelöst und anschließend mit dem Harz vermischt. Unter Rühren bei 50 °C wird das Dichlormethan anschließend im Vakuum restlos entfernt.

**Tabelle 13: Typische Formulierung für ein nicht vorbehandeltes Bohrloch**

| **Komponente** | **Konzentration [Mol-%]** | **Masse [g]** | **Anmerkung** |
|---|---|---|---|
| Bisphenol-A-diglycidylether | - | 27,23 | BADGE |
| Diphenyliodoniumtetrakis(perfluor-tert-butyl)-aluminat | 0,5 | 0,50 | DPI TTA |
| 1,1,2,2-Tetraphenylethandiol | 4,0 | 1,17 | TPED, Benzpinakol |
| 3-Glycidoxypropyltrimethoxysilan | 7,2 | 1,36 | GPTMS Primer |

### Vorbereitung der Bohrlöcher

Mit einer Schlagbohrmaschine wurden Löcher mit einem Durchmesser von 14 mm in Granit, Beton und Ziegel gebohrt. Anschließend wurden die Bohrlöcher mit Druckluft ausgeblasen, um sie von anhaftendem Staub zu befreien. Da die Haftung zwischen Stein und Epoxidformulierung unter Umständen unzureichend ist, besteht die Möglichkeit, diese durch Einsatz eines Primers zu verbessern. Dabei kann der Primer entweder der Formulierung beigemischt oder vorab in die Bohrlöcher appliziert werden. Als Primer diente im vorliegenden Fall 3-Glycidoxypropyltrimethoxysilan.

### Methode A: Direktes Vorbehandeln der Bohrlöcher

Als Vorbehandlung wurde eine Formulierung, umfassend 50 ml Ethanol (96 %), 0,23 ml 3-Glycidoxypropyltrimethoxysilan sowie 1,5 ml verdünnte Essigsäure (Eisessig-Wasser, 1:10) hergestellt. Mit dieser Lösung wurden die Bohrlöcher zur Gänze gefüllt, und sie wurde darin rund eine Stunde lang bei Raumtemperatur einwirken gelassen. Anschließend wurden die Steine (jeweils Beton, Granit und Ziegel) über Nacht in einem Ofen bei 60 °C gehalten. Die Lösung war am nächsten Tag vollständig aufgetrocknet. Bohrlöcher, die einer solchen Vorbehandlung unterzogen wurden, werden nachstehend als "geprimed" bezeichnet.

### Methode B: Zugabe des Primers zur Reaktionsformulierung

Zu der oben beschriebenen Harzformulierung wurden gemeinsam mit den Initiatoren zusätzlich 5 Gew.-% 3-Glycidoxypropyl-trimethoxysilan hinzugefügt. Nach Zugabe des Harzes wurde das Lösungsmittel abgezogen und die Formulierung entgast.

### Gewindestangen

Für die Befestigung von Gewindestangen in den Gesteinen wurden die Gewindestangen (12 mm Durchmesser) auf 11 cm abgelängt und die Kanten entgratet. Aus der Größe des Bohrlochs (14 mm) und dem Durchmesser der Gewindestangen ergibt sich ein Ringspalt von 1 mm.

### Polymerisation

Etwa die Hälfte des Volumens der Bohrlöcher wurde mit der Reaktionsformulierung gefüllt und anschließend die Gewindestange mittig platziert. Danach wurde die Reaktion durch Bestrahlung der sichtbaren Fläche der Formulierung gestartet. Dabei wurde mit einer UV-Vis-Lichtquelle, ausgestattet mit einem 320-500 nm Filter, über einen flüssigkeitsgefüllten Lichtwellenleiter mit 8 mm Durchmesser bestrahlt. Die Bestrahlungsintensität am Ausgang des Lichtwellenleiters wurde auf 3 W/cm² eingestellt.

### Zugfestigkeitsversuche

Um die Haftung des Polymers zwischen Gewindestange und Gestein zu testen, wurden die erhaltenen Proben anschließend mittels einer Zugprüfmaschine (Zwick Z250) untersucht. Dazu wurde an den Gewindestangen eine weitere Gewindestange mittels zweier Muttern befestigt, die anschließend in die Zugprüfmaschine eingespannt wurde. Das Gestein wurde durch über ein Widerlager darunter befestigt.

Die Prüfung erfolgte mit einer Geschwindigkeit von 10 mm/min. Die dabei typischerweise maximal notwendigen Kräfte sind in Tabelle 14 aufgelistet. Es ist dabei festzuhalten, dass zwischen der Zugabe des Primers in die Formulierung und der Vorbehandlung der Bohrlöcher kein signifikanter Unterschied zu erkennen war. Weiters wurden stets Teile des Ziegels beim Versuch des Herausreißens zerstört.

**Tabelle 14: zum Entfernen der Gewindestangen aus dem Bohrloch erforderliche Kraft**

| **Material** | **Maximale Kraft [N]** |
|---|---|
| Beton | 1100 |
| Ziegel | 1050 |
| Granit | 500 |

Zusammengefasst bestätigen die obigen erfindungsgemäßen Beispiele eindrucksvoll die Überlegenheit der vorliegenden Erfindung gegenüber dem Stand der Technik, womit vor Beginn der Forschungen der Erfinder keineswegs zu rechnen war.

## Patentansprüche

1. Verwendung von Aryliodonium- und/oder Arylsulfoniumsalzen des Tetrakis-(perfluor-t-butyloxy)aluminat-Anions der nachstehenden Formel (I): 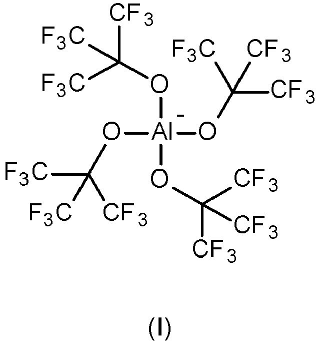 als durch Licht und/oder Radikale spaltbare kationische Initiatoren bei der Polymerisation kationisch polymerisierbarer Monomere.

2. Verwendung nach Anspruch 1, **dadurch gekennzeichnet, dass** das Diphenyliodonium-tetrakis(perfluor-t-butyloxy)aluminat der nachstehenden Formel (II) als kationischer Initiator eingesetzt wird:

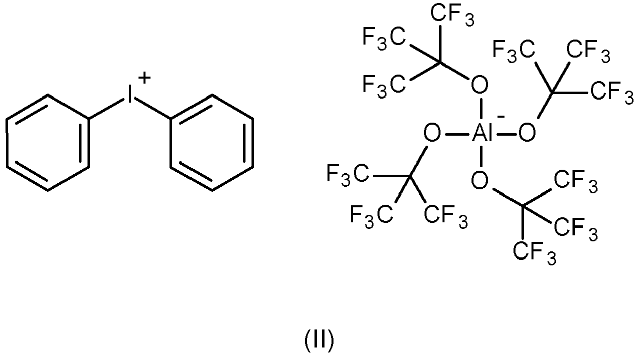

3. Verwendung nach Anspruch 1, **dadurch gekennzeichnet, dass** Triphenylsulfonium-tetrakis(perfluor-t-butyloxy)aluminat der nachstehenden Formel (III), gegebenenfalls mit Phenylthio oder 4-Diphenylsulfoniophenylthio substituiert, als kationischer Initiator eingesetzt wird:

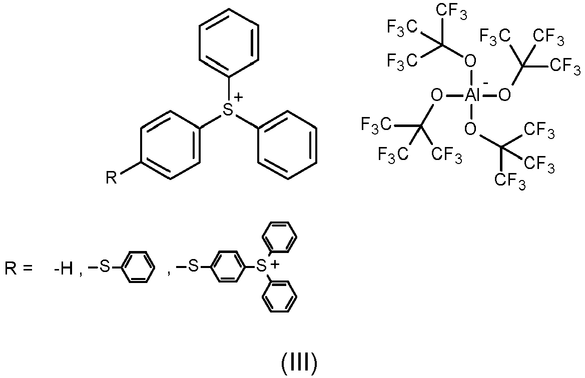

4. Verwendung nach Anspruch 1, **dadurch gekennzeichnet, dass** Tris(4-((4-acetylphenyl)thio)phenyl)sulfonium-tetrakis(perfluor-t-butyloxy)aluminat der nachstehenden Formel (IV) als kationischer Initiator eingesetzt wird:

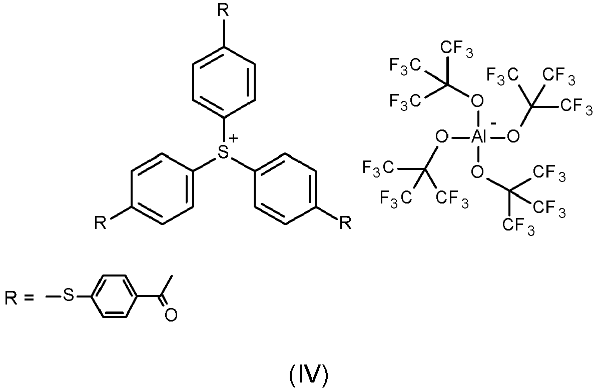

5. Verwendung nach einem der Ansprüche 1 bis 4, **dadurch gekennzeichnet, dass** die kationische Polymerisation als ringöffnende Polymerisation durchgeführt wird.

6. Verwendung nach Anspruch 5, **dadurch gekennzeichnet, dass** als kationisch polymerisierbare Monomere ein- oder mehrwertige Epoxide (Oxirane), Thiirane (Episulfide), Oxetane, Lactame, Lactone, Lactid, Glykolid, Tetrahydrofuran oder Gemische davon eingesetzt werden.

7. Verwendung nach Anspruch 6, **dadurch gekennzeichnet, dass** als kationisch polymerisierbare Monomere ein oder mehrere mehrwertige Epoxide eingesetzt wird/ werden.

8. Verwendung nach einem der Ansprüche 1 bis 4, **dadurch gekennzeichnet, dass** als kationisch polymerisierbare Monomere ein oder mehrere mehrwertige Vinylether eingesetzt wird/werden.

9. Verwendung nach einem der Ansprüche 1 bis 8, **dadurch gekennzeichnet, dass** das zu polymerisierende Reaktionsgemisch weiters eine oder mehrere Komponenten, ausgewählt aus zusätzlichen Initiatoren, zusätzlichen Monomeren, Sensibilisatoren, Stabilisatoren, Modifikatoren, Reglern, Lösungsmitteln, Füllstoffen, Farbstoffen, Pigmenten und Gemischen davon umfasst.

10. Verwendung nach Anspruch 9, **dadurch gekennzeichnet, dass** das Reaktionsgemisch weiters zumindest einen thermisch-radikalischen Initiator umfasst und die Polymerisationsreaktion als Frontalpolymerisation durchgeführt wird.

11. Diphenyliodonium-tetrakis(perfluor-t-butyloxy)aluminat der nachstehenden Formel (II):

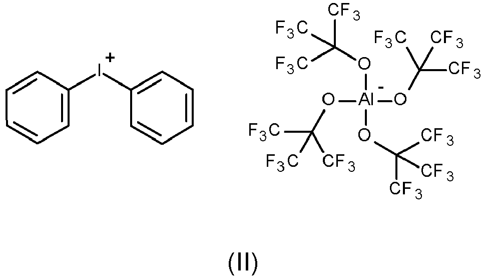

12. Gegebenenfalls mit Phenylthio und 4-Diphenylsulfoniophenylthio substituiertes Triphenylsulfonium-tetrakis(perfluor-t-butyloxy)aluminat der nachstehenden Formel (III) :

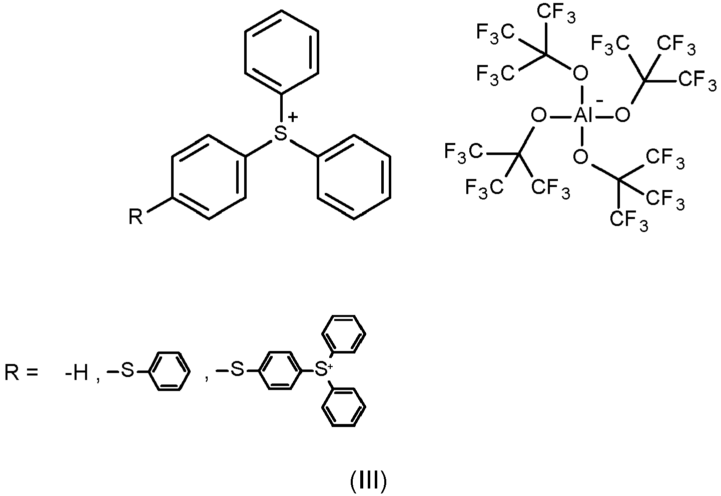

13. Tris(4-((4-acetylphenyl)thio)phenyl)sulfonium-tetrakis(perfluor-t-butyloxy)aluminat der nachstehenden Formel (IV):

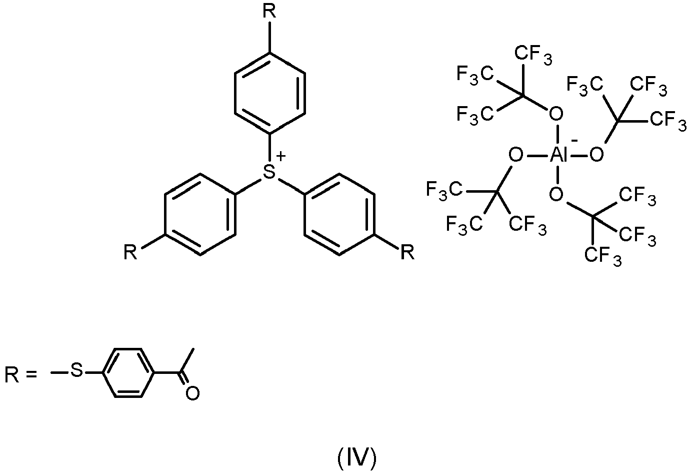

## Claims

1. A use of aryliodonium and/or arylsulfonium salts of the tetrakis(perfluoro-t-butyloxy)aluminate anion of the following formula (I): 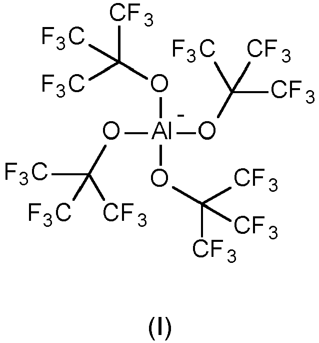 as cationic initiators cleavable by light and/or free radicals for polymerizing cationically polymerizable monomers.

2. The use according to claim 1, **characterized in that** the dipenyliodonium-tetra-kis(perfluoro-t-butyloxy)aluminate of the following formula (II) is used as a cationic initiator:

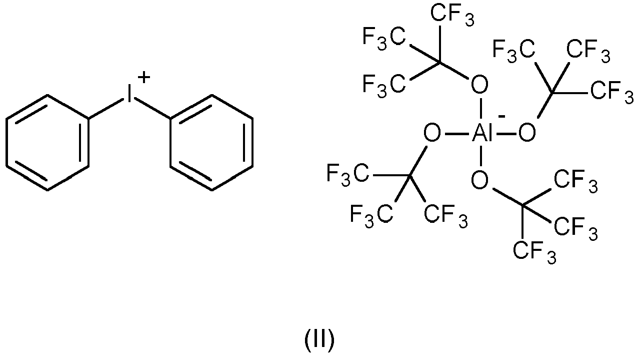

3. The use according to claim 1, **characterized in that** triphenylsulfonium-tetrakis-(perfluoro-t-butyloxy)aluminate of the following formula (III), optionally substituted with phenylthio or 4-diphenylsulfoniophenylthio, is used as a cationic initiator:

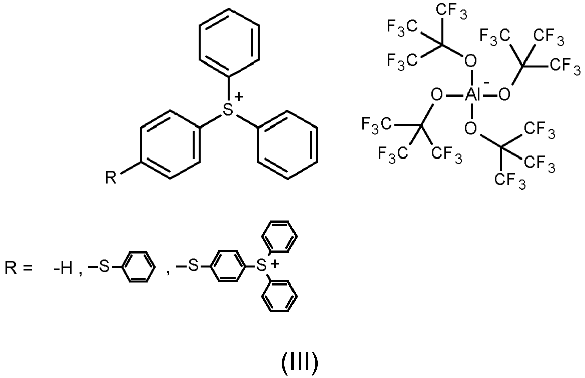

4. The use according to claim 1, **characterized in that** tris(4-((4-acetylphenyl)thio)-phenyl)sulfonium-tetrakis(perfluoro-t-butyloxy)aluminate of the following formula (IV) is used as a cationic initiator:

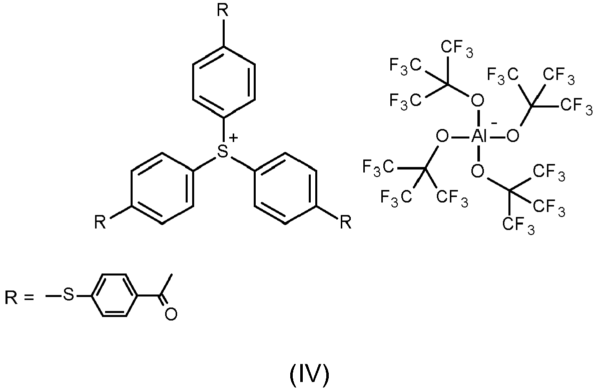

5. The use according to any one of claims 1 to 4, **characterized in that** the cationic polymerization is carried out as a ring-opening polymerization.

6. The use according to claim 5, **characterized in that** mono- or multivalent epoxides (oxiranes), thiiranes (episulfides), oxetanes, lactames, lactones, lactide, glycolide, tetrahydrofuran, or mixtures thereof are used as cationically polymerizable monomers.

7. The use according to claim 6, **characterized in that** one or more multivalent epoxide(s) is/are used as cationically polymerizable monomers.

8. The use according to any one of claims 1 to 4, **characterized in that** one or more multivalent vinyl ether(s) is/are used as (a) cationically polymerizable monomers).

9. The use according to any one of claims 1 to 8, **characterized in that** the reaction mixture to be polymerized further comprises one or more components selected from additional initiators, additional monomers, sensitizers, stabilizers, modifiers, regulators, solvents, fillers, dyes, pigments, and mixtures thereof.

10. The use according to claim 9, **characterized in that** said reaction mixture further comprises at least one thermal free-radical initiator; and that the polymerization reaction is performed as a frontal polymerization.

11. Diphenyliodonium-tetrakis(perfluoro-t-butyloxy)aluminate of the following formula (II):

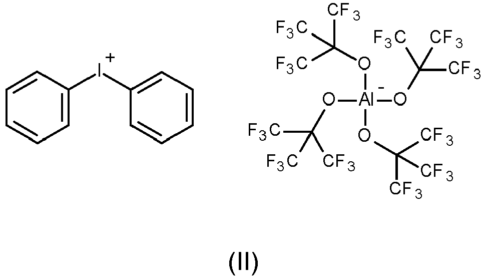

12. Triphenylsulfonium-tetrakis(perfluoro-t-butyloxy)aluminate, optionally substituted with phenylthio and 4-diphenylsulfoniophenylthio, of the following formula (III):

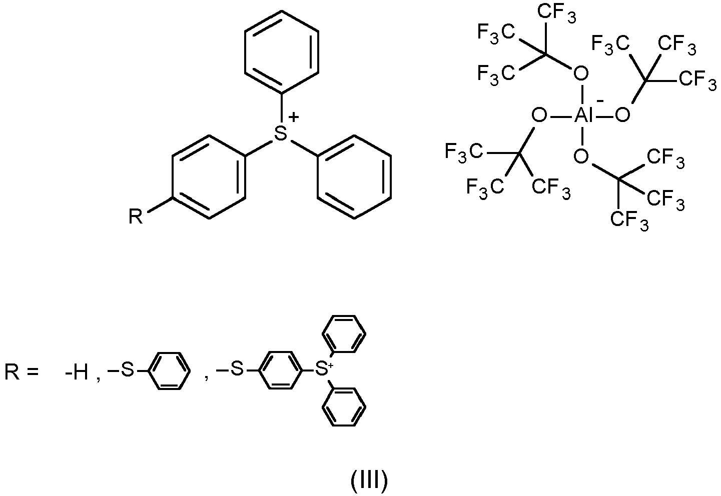

13. Tris(4-((4-acetylphenyl)thio)phenyl)sulfonium-tetrakis(perfluoro-t-butyloxy)-aluminate of the following formula (IV):

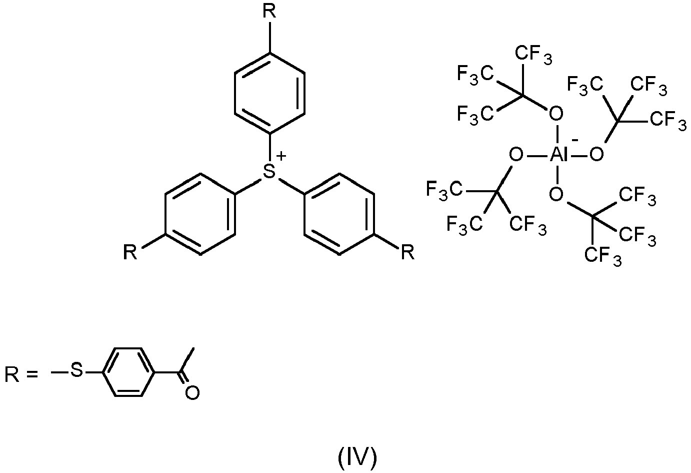

## Revendications

1. Utilisation de sels d'aryliodonium et/ou d'arylsulfonium de l'anion de tétrakis-(perfluor-t-butyloxy)aluminate selon la formule (I) ci-dessus 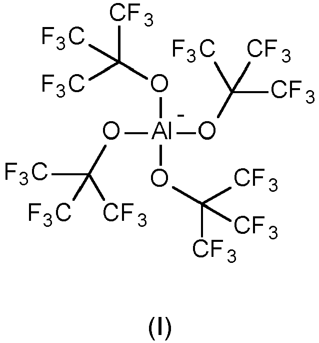 comme amorceurs cationiques, clivables avec de la lumière et/ou des radicaux, dans la polymérisation de monomères polymérisables par voie cationique.

2. Utilisation selon la revendication 1, **caractérisée en ce que** le diphényl-iodonium-tétrakis(perfluor-t-butyloxy)aluminate selon la formule (II) ci-dessus est employé comme amorceur cationique:

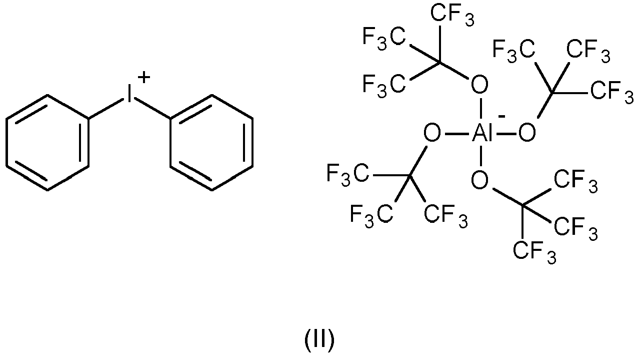

3. Utilisation selon la revendication 1, **caractérisée en ce que** le triphénylsulfonium-tétrakis(perfluor-t-butyloxy)aluminate selon la formule (III) ci-dessus, éventuellement substitué avec phényltio ou 4-diphénylsulfoniophenylthio, est utilisé comme amorceur cationique:

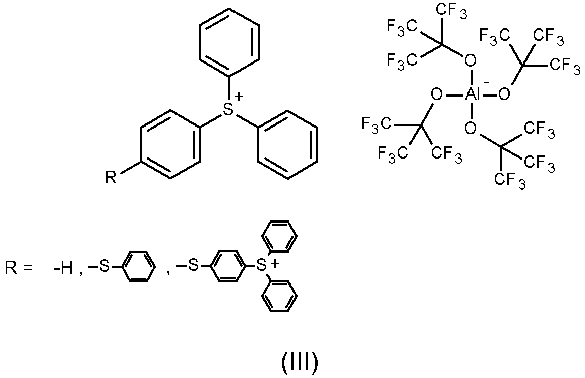

4. Utilisation selon la revendication 1, **caractérisée en ce que** le tris(4-((4-acétyl-phényl)thio)phényl)sulfonium-tétrakis(perfluor-t-butyloxy)aluminate selon la formule (IV) ci-dessus est utilisé comme amorceur cationique:

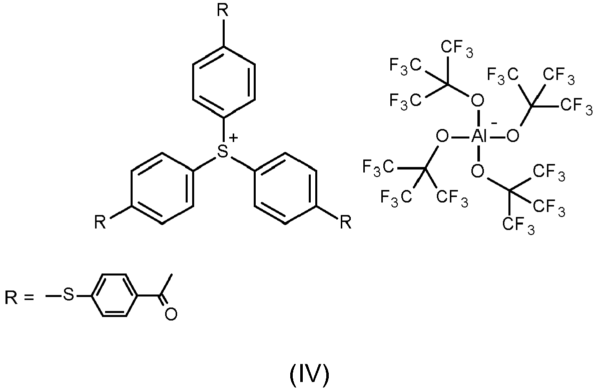

5. Utilisation selon une des revendications 1 à 4, **caractérisée en ce que** la polymérisation cationique est effectuée sous forme de polymérisation par ouverture de cycle.

6. Utilisation selon la revendication 5, **caractérisée en ce que** des époxydes (oxyranes) monovalents ou bivalents, des thiiranes (episulfides), des oxétanes, des lactames, des lactones, du lactide, du glycolide, du tétrahydrofurane ou des mélanges de ceux-ci sont utilisés des monomères cationiques polymérisables.

7. Utilisation selon la revendication 6, **caractérisée en ce qu'**un ou plusieurs époxydes polyvalents sont utilisés comme monomères cationiques polymérisables.

8. Utilisation selon une quelconque des revendications 1 à 4, **caractérisée en ce qu'**un ou plusieurs éthers vinyliques sont utilisés comme monomères cationiques polymérisables.

9. Utilisation selon une quelconque des revendications 1 à 8, **caractérisée en ce que** le mélange réactif à polymériser comprend en plus une ou plusieurs composants choisis parmi des amorceurs supplémentaires, des monomères supplémentaires, des sensibilisateurs, des stabilisateurs, de modificateurs, des régulateurs, des solvants, des charges, des colorants, des pigments et des mélanges de ceux-ci.

10. Utilisation selon la revendication 9, **caractérisée en ce que** le mélange réactif comprend en plus au moins un amorceur thermique radicalaire et **en ce que** la réaction de polymérisation est effectuée sous forme de polymérisation frontale.

11. Diphényliodonium-tétrakis(perfluor-t-butyloxy)aluminate selon la formule (ii) ci-dessus:

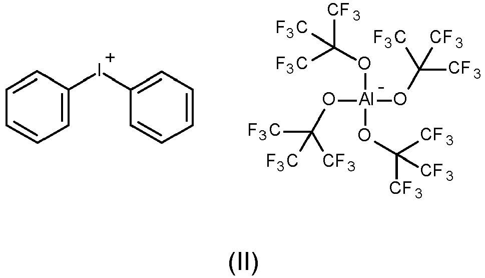

12. Triphénylsulfonium-tétrakis(perfluor-t-butyloxy)aluminate selon la formule (III) ci-dessus, éventuellement substitué avec phénylthio et 4-diphénylsulfoniophénylthio:

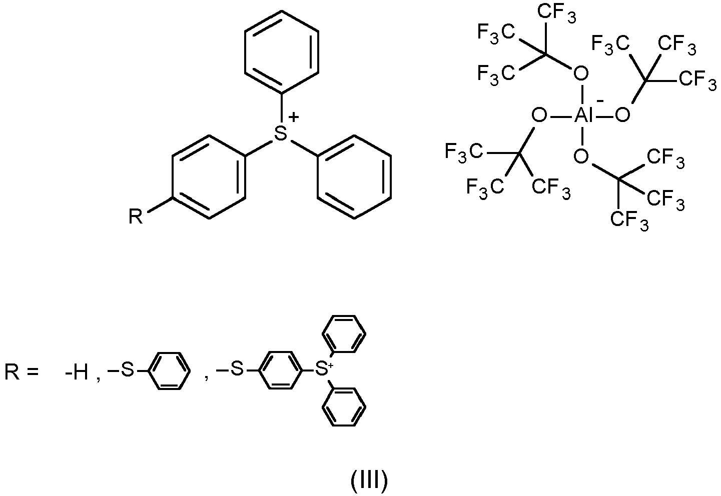

13. Tris(4-((4-acetylphényl)thio)phényl)sulfonium-tétrakis(perfluor-t-butyloxy)aluminate selon la formule (IV) ci-dessus:
